# EUROPEAN PATENT APPLICATION

(11) **EP 1 662 770 A2**
(43) Date of publication of application: **31.05.2006**
(21) Application number: 05257259.1
(22) Date of filing: 25.11.2005
(51) Int. Cl.: H04N 1/405

(54) **Image processing device and image processing method**

(30) Priority: 25.11.2004 JP 2004339912; 20.01.2005 JP 2005012417; 25.08.2005 JP 2005244667
(71) Applicant: SEIKO EPSON CORPORATION, Shinjuku-ku, Tokyo 163-0811 (JP)
(72) Inventor: Miyamoto, Toru, c/o Seiko Epson Corporation, Suwa-shi, Nagano-ken 392-8502 (JP)
(74) Representative: Cloughley, Peter Andrew

(57) **Abstract**

An image processing device includes a binarization unit for converting a pixel value of image data into binary data, the pixel value showing a gradation value of a pixel, the image data including a plurality of pixels, the pixels being laid out as a matrix, the binary data showing a dot radius of a unit dot, the unit dot being laid out with lower resolution than the maximum print resolution at least in a direction of print media feeding direction; an expansion dot generation unit for generating print control data on the basis of the binary data obtained by the binarization unit, the print control data including data showing dot radii of a standard dot and an expansion dot, the standard dot being formed at a location, the location being determined on the basis of the unit dot, the expansion dot being formed at a different location to the standard dot; and an output unit for outputting to a image forming device the print control data generated by the expansion dot generation unit, the image forming device having a plurality of nozzles, the nozzle ejecting an ink dot; wherein a density of an image including the standard dot and the expansion dot is approximately equal to a density of an image including the unit dot.

## Description

### BACKGROUND

### 1. Technical Field

The present invention relates to an image processing device. Specifically, the present invention relates to an ink jet printer for outputting color ink in particulate form (ink dots) onto a print media to thereby form desired characters and images.

### 2. Related Art

In line with widespread consumer use of personal computers, digital cameras, and so on, ink jet printers are also now widely used by consumers, as well as in offices. The popularity of such printers is due to their ability to provide high quality color printing at a low cost.

Generally, ink jet printers have a carriage in which ink cartridges with integral printing heads are provided. In operation, the carriage of the printer is caused to scan in a direction orthogonal to that in which a sheet for printing is fed through the printer (chassis), and ink is ejected in particulate form from the printing heads onto a print media to thereby form thereon desired characters and images. Ink jet printers are capable of forming color images as well as monochrome images by use of a carriage having color ink cartridges (for example, black (K), yellow (Y), magenta (M), and cyan (C)), the cartridges being provided with an integral printing head. To obtain higher quality color images, recently some ink jet printers have been developed having six, seven, or eight color ink cartridges (for example, light-cyan and light-magenta as well as YMCK).

An ink jet printer that carries out printing by scanning of its cartridge carriage in a direction orthogonal to a print media feeding direction is called as "multi-pass printer". In using such a printer, to obtain an image that covers the entire surface of the print media, it is necessary for the carriage of the printer to scan orthogonal to the media tens of hundreds of times. Consequently, such printers suffer from a disadvantage in that they take a long time to print an image as compared to, for example, laser printers using electrophotography.

To attain high speed printing, there has been developed an ink jet printer having a long printing head and no carriage. This type of ink jet printer is referred to as a "line head printer". In using a line head printer, there is no necessity to move a printing head in a direction orthogonal to that of feeding of print media A line head printer carries out so-called "single-pass printing"; and is able to produce prints at a rate that is as fast as that of a laser printer.

The printing head of a single-pass printer is provided with micro nozzles having a diameter of 10-70 micrometers. The nozzles are provided in the printing head at regular intervals; and their layout may be such as is capable of printing a plurality of lines. In a case that an output direction of a nozzle of such a printing head deviates from its ideal direction because of a fabrication error, or in a case that a position of the nozzle deviates from its ideal position because of a fabrication error, an ink dot formed on a paper by the nozzle will also deviate from its ideal position. This phenomenon is referred to as "splash bending", and causes print errors.

Specifically, splash bending causes a deterioration in print quality. Specifically, intervals between two ink dots are made non-uniform dependent on a splash bending. Thus, at a part of a printed image in which two ink dots are printed at an interval that is longer than the ideal interval, a light band (or a white band) is likely to appear; and at a part of printed image in which two ink dots are printed at an interval that is shorter than the ideal interval, a dark band is likely to appear. This phenomenon is referred to as "banding".

It is possible in a multi-pass printer to alleviate or prevent such banding by repeatedly moving the printing head. However, in a single pass printer it is not possible to move the printing head in this manner and therefore banding may become a serious problem.

To prevent banding, two approaches are available. One approach is to improve hardware such as a printing head or a carriage. The other approach is to improve software for processing image data. For example, JP-A-2003-094620 discloses a software approach to prevent banding. JP-A-2003-094620 discloses an image processing method by which ink dots are laid out in a staggered arrangement. In a case that the resolution of a printed image is 720 dpi (dot per inch), the ink dots are laid out on lattice points whose interval is 1/720 inch in accordance with the normal image processing. However, the interval between two ink dots is 1/720/√2 in accordance with JP-A-2003-094620. In other words, by employing the image processing method disclosed in JP-A-2003-094620, the effective print resolution becomes 1/√2 of the maximum resolution.

According to JP-A-2003-094620, binarization can be reduced to 1/√2 of that according to a usual image processing method. However, JP-A-2003-094620 is subject to a problem in that the print resolution also becomes 1/√2 of the maximum resolution attained by a usual image processing method. While an image processing device is required to be capable of both high speed and high quality print output, JP-A-2003-094620 is unable to provide high quality print output because its print resolution is lower than that attained by a usual image processing method.

### SUMMARY

An advantage of some aspects of the invention is to provide an image processing device that is capable of reducing binarization while obtaining high quality printing, including prevention of banding.

According to an aspect of the invention, an image processing device comprises: a binarization unit for converting a pixel value of image data into binary data, the pixel value showing a gradation value of a pixel, the image data including a plurality of pixels, the pixels being laid out as a matrix, the binary data showing a dot radius of a unit dot, the unit dot being laid out with lower resolution than the maximum print resolution at least in a direction of print media feeding direction; an expansion dot generation unit for generating print control data on the basis of the binary data obtained by the binarization unit, the print control data including data showing dot radii of a standard dot and an expansion dot, the standard dot being formed at a location, the location being determined on the basis of the unit dot, the expansion dot being formed at a different location to the standard dot; and an output unit for outputting to a image forming device the print control data generated by the expansion dot generation unit, the image forming device having a plurality of nozzles, the nozzle ejecting an ink dot; wherein a density of an image including the standard dot and the expansion dot is approximately equal to a density of an image including the unit dot.

According to the image processing device, the binarization frequency is decreased to a predetermined number corresponding to a predetermined resolution that is less than the maximum print resolution. Furthermore, the standard dots and the expansion dots provides high quality print in view of granularity. In addition, the expansion dots are formed so as to have an offset, thereby provides high quality print in view of banding. The standard dots and the expansion dots may be formed by different nozzles. The output characteristic of the nozzles for the standard dot and nozzles for the expansion dot may be different from each other. The nozzles for the expansion dot may be manufactured with low accuracy. The low accuracy nozzle can be manufactured at a low cost.

It is preferable that the expansion dot is formed at the nearest location to the corresponding standard dot.

It is preferable that the expansion dot is formed by one of a plurality of nozzles that is located next to a nozzle ejecting the standard dot. In addition, the expansion dot is formed on a line that is next to a line on which the standard dot is formed.

It is preferable that the dot radius of the standard dot is greater than or equal to that of the corresponding expansion dot.

It is preferable that each of the dot radius of the standard dot and the expansion dot is an integer multiple of the minimum dot radius.

It is preferable that the expansion dot generation unit changes the layout of the standard dot and the expansion dot at a predetermined interval. In addition, it is preferable that the layout is changed in a direction of print media feeding direction or in a direction orthogonal to the print media feeding direction.

It is preferable that the image processing device further comprises: a deviation memory for storing deviations of densities of dots from ideal densities. In addition, it is preferable that the dots are formed by a plurality of nozzles. Furthermore, it is preferable that the expansion dot generation unit determines the dot radius of the expansion dot on the basis of the deviation of a nozzle ejecting the standard dot next to the expansion dot.

It is preferable that the image processing device further comprises: an expansion dot memory for storing an expansion dot table. In addition, it is preferable that the expansion dot table includes a deviation of a nozzle, a dot radius of the unit dot, and the dot radius of the corresponding expansion dot. Furthermore, it is preferable that the expansion dot generation unit determines the dot radius of the expansion dot by referring to the expansion dot table.

It is preferable that the expansion dot generation unit selects a dot radius from dot radii, the selected dot radius is the nearest to a dot radius obtained by the binarization unit.

It is preferable that the expansion dot generation unit makes the dot radius of the expansion dot bigger in a case that the density of image is less than the ideal density.

It is preferable that the expansion dot generation unit makes the dot radius of the expansion dot smaller in a case that the density of image is greater than the ideal density.

It is preferable that the deviation in a density is calculated on the basis of the deviation of a position of a nozzle from the ideal position.

It is preferable that the deviation in a density is calculated on the basis of the deviation of a dot radius from the ideal dot radius.

It is preferable that the deviation in a density is calculated on the basis of both (A) the deviation of a position of a nozzle from the ideal position and (B) the deviation of a dot radius from the ideal dot radius.

According to another aspect of the invention, an image processing method comprises converting a pixel value of image data into binary data, the pixel value showing a gradation value of a pixel, the image data including a plurality of pixels, the pixels being laid out as a matrix, the binary data showing a dot radius of a unit dot, the unit dot being laid out with lower resolution than the maximum print resolution at least in a direction of print media feeding direction; generating print control data on the basis of the binary data, the print control data including data showing dot radii of a standard dot and an expansion dot, the standard dot being formed at a location, the location being determined on the basis of the unit dot, the expansion dot being formed at a different location to the standard dot; and outputting to an image forming device the print control data, the image forming device having a plurality of nozzles, the nozzle ejecting an ink dot; wherein a density of an image including the standard dot and the expansion dot is approximately equal to a density of an image including the unit dot.

### BRIEF DESCRIPTION OF THE DRAWINGS

The invention will be described with reference to the accompanying drawings, wherein like numbers reference like elements.

Fig. 1 shows ink jet printer 2 and personal computer 1 for controlling ink jet printer 2, in accordance with the first embodiment.

Fig. 2 shows a block diagram illustrating a hardware configuration of personal computer 1.

Fig. 3 shows a flow chart illustrating operations for generating a standard dot and an expansion dot in accordance with the first embodiment.

Fig. 4 shows a relation between a dot radius and density of a unit dot.

Fig. 5 shows an example of the standard dots and the expansion dots.

Fig. 6A shows the required density before the standard dot and the expansion dot are generated. In other words, Fig. 6A shows the image data after the binarization.

Fig. 6B shows the required density after the standard dot and the expansion dot are generated in accordance with the first embodiment.

Fig. 6C shows the standard dots and the expansion dots formed in accordance with the first embodiment, based on the required density shown in Fig. 6B.

Fig. 7 shows an example pattern including the standard dots and the expansion dots formed in accordance with the first embodiment.

Fig. 8 shows an example pattern formed in accordance with the related art.

Fig. 9 shows another example pattern formed in accordance with the related art.

Fig. 10 shows another example pattern.

Fig. 11 shows an example pattern formed in accordance with the related art.

Fig. 12 shows a configuration of a printing head.

Fig. 13 shows a flow chart illustrating operations for generating a standard dot and an expansion dot in accordance with the second embodiment.

Fig. 14A shows the required density before the standard dot and the expansion dot are generated.

Fig. 14B shows the required density after the standard dot and the expansion dot are generated in accordance with the second embodiment.

Fig. 14C shows the standard dots and the expansion dots formed in accordance with the second embodiment, based on the required density shown in Fig. 14B.

Fig. 15 shows an example pattern including the standard dots and the expansion dots in accordance with the second embodiment.

Fig. 16 shows a flow chart illustrating operations for generating a standard dot and an expansion dot in accordance with the third embodiment.

Fig. 17A shows the required density before the standard dot and the expansion dot are generated.

Fig. 17B shows the required density after the standard dot and the expansion dot are generated in accordance with the third embodiment.

Fig. 17C shows the standard dots and the expansion dots formed in accordance with the third embodiment, based on the required density shown in Fig. 17B.

Fig. 18 shows an example pattern including the standard dots and the expansion dots in accordance with the third embodiment.

Figs. 19A shows an example of deviation of ink dots.

Fig. 19B shows an example pattern including the standard dots and the expansion dots formed by the sixth embodiment based on the required density shown in Fig. 19A.

Figs. 20A shows another example of deviation of ink dots.

Fig. 20B shows an example pattern including the standard dots and the expansion dots formed by the sixth embodiment based on the required density shown in Fig. 20A

Figs. 21 A shows another example of deviation of ink dots.

Fig. 21 B shows an example pattern including the standard dots and the expansion dots formed by the sixth embodiment based on the required density shown in Fig. 21 A.

Figs. 22A shows another example of deviation of ink dots.

Fig. 22B shows an example pattern including the standard dots and the expansion dots formed by the sixth embodiment based on the required density shown in Fig. 22A.

Figs. 23A shows another example of deviation of ink dots.

Fig. 23B shows an example pattern including the standard dots and the expansion dots formed by the sixth embodiment based on the required density shown in Fig. 23A.

Fig. 24 shows an example of a dot pitch table.

Fig. 25 shows an example of an expansion dot table.

Fig. 26 shows an example of a standard dot table.

Fig. 27 shows a flow chart illustrating operations for generating a standard dot and an expansion dot in accordance with the fourth embodiment.

Fig. 28A shows the required density before the standard dot and the expansion dot are generated.

Fig. 28B shows the required density after the standard dot and the expansion dot are generated in accordance with the fourth embodiment.

Fig. 28C shows the standard dots and the expansion dots formed in accordance with the fourth embodiment, based on the required density shown in Fig. 28B.

Fig. 29 shows an example pattern including the standard dots and the expansion dots in accordance with the fourth embodiment.

Fig. 30 shows an example pattern formed in accordance with the first embodiment.

Fig. 31 shows an example of an expansion dot table in accordance with the fifth embodiment.

Fig. 32 shows an example of a standard dot table in accordance with the fifth embodiment.

Fig. 33A shows an example of deviation of ink dots.

Fig. 33B shows an example pattern including the standard dots and the expansion dots formed by the sixth embodiment based on the required density shown in Fig. 33A.

Fig. 34A shows another example of deviation of ink dots.

Fig. 34B shows an example pattern including the standard dots and the expansion dots formed by the sixth embodiment based on the required density shown in Fig. 34A.

Fig. 35A shows another example of deviation of ink dots.

Fig. 35B shows an example pattern including the standard dots and the expansion dots formed by the sixth embodiment based on the required density shown in Fig. 35A.

Figs. 36A shows another example of deviation of ink dots.

Fig. 36B shows an example pattern including the standard dots and the expansion dots formed by the sixth embodiment based on the required density shown in Fig. 36A.

Fig. 37 shows dot radii that printing head A and printing head B can eject in accordance with the fifth embodiment.

Fig. 38A shows the required density before the standard dot and the expansion dot are generated.

Fig. 38B shows the required density after the standard dot and the expansion dot are generated in accordance with the fifth embodiment.

Fig. 38C shows the standard dots and the expansion dots formed in accordance with the fifth embodiment, based on the required density shown in Fig. 38B.

Fig. 39 shows an example pattern including the standard dots and the expansion dots in accordance with the fifth embodiment.

Fig. 40A shows the required density before the standard dot and the expansion dot are generated.

Fig. 40B shows the required density after the standard dot and the expansion dot are generated in accordance with another embodiment.

Fig. 40C shows the standard dots and the expansion dots formed in accordance with another embodiment, based on the required density shown in Fig. 40B.

Fig. 41 shows examples of the deviation in the dot size.

Fig. 42 shows a histogram of the deviation in dot size.

Fig. 43 shows an example of the inter-dot density table in accordance with the sixth embodiment.

Fig. 44 shows an example of the expansion dot table in accordance with the sixth embodiment.

### DESCRIPTION OF EXEMPLARY EMBODIMENTS

1. First Embodiment

The first embodiment of the invention will be described with reference to the drawings.

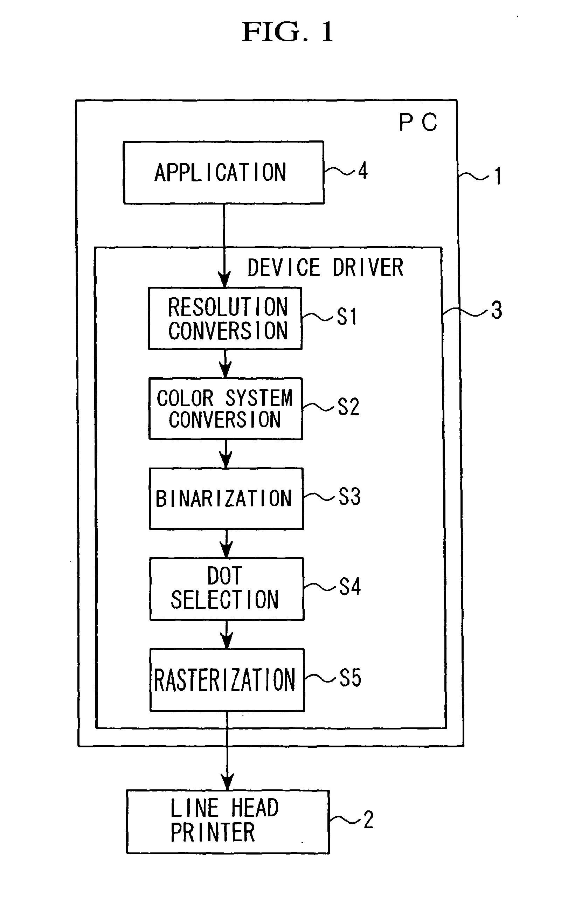

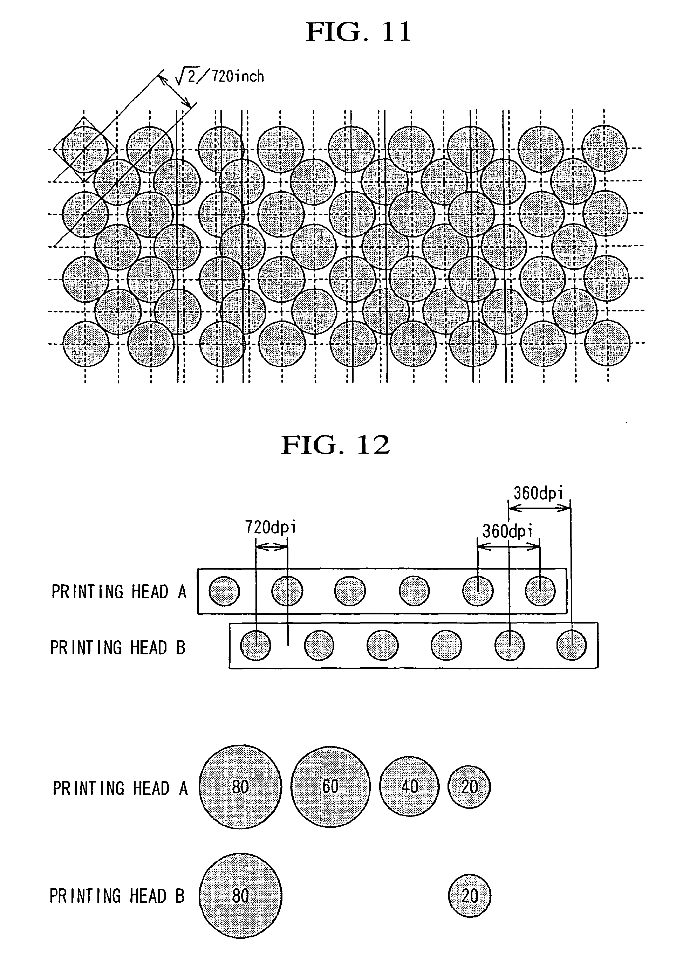

Fig. 1 shows ink jet printer 2 and personal computer 1 for controlling ink jet printer 2, in accordance with the present embodiment. Device driver 3 is software for driving ink jet printer 2. Device driver 3 is installed in personal computer 1. Personal computer 1 controls ink jet printer 2 by executing device driver 3 on application software 4. Thus, personal computer 1 controls ink jet printer 2 to print image. In the present embodiment, ink jet printer 2 is a line head printer described above. The maximum print resolution of ink jet printer 2 is 720 dpi (dot per inch). As will be described later with reference to Fig. 12, ink jet printer 2 has printing head A and printing head B. In printing head A, a plurality of nozzles are laid out at a regular interval of 1/360 inch. The interval corresponds to a print resolution of 360 dpi. The nozzles are laid out in a direction orthogonal to the print media feeding direction (sheet feeding direction). Printing head B has the same structure as printing head A. The number of nozzles corresponds to the width of the paper (print medium). Printing head A and printing head B are laid out so that the nozzles of printing head A and those of printing head B have offset of 1/720 inch The offset corresponds to a print resolution of 720 dpi. The offset direction is orthogonal to the print media feeding direction. A line head provided with printing head A and printing head B has maximum print resolution of 720 dpi. Ink jet printer 2 has four line heads. Each of the line heads corresponds to cyan ink (C), magenta ink (M), yellow ink (Y), and black ink (K), respectively. Each nozzle of the line head unit ejects the liquid ink in particular form (ink dot) under the control of device driver 3. Ink jet printer 2 provides the single-pass printing by relatively moving the line head unit against the paper in the print media feeding direction.

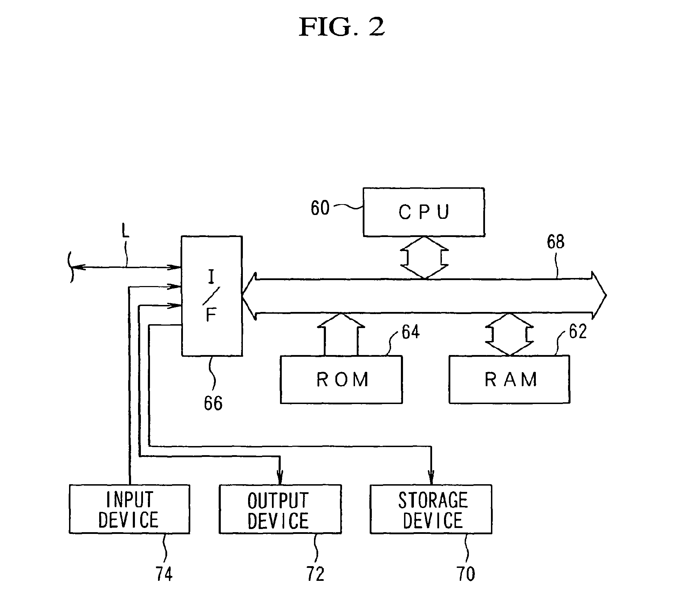

Fig. 2 shows a block diagram illustrating a hardware configuration of personal computer 1. Device driver 3 is software. CPU (Central Processing Unit) 60 is a controller for controlling another part of personal computer 2 and for performing calculations. RAM (Random Access Memory) 62 is a main memory. ROM (Read Only Memory) 64 is a read only memory device. Input/output interface 66 is an interface for communicating data and control signals between two elements of personal computer 2. Bus 68 is a data bus such as PCI or ISA. Storage device 70 is an external memory such as HDD (Hard Disk Drive). Output device 72 is, for example, ink jet printer 1, a CRT (Cathode Ray Tube), or an LCD (Liquid Crystal Display). Input device 74 has, for example, an operation panel, a mouse, a keyboard, or an image scanner. Network L is a network for communicating with an external device such as print instruction device (not shown in the figures).

When personal computer 1 is turned on, a system program such as BIOS (Basic Input/Output System) stored in ROM 64 is executed. The BIOS loads to RAM 62 computer programs stored in ROM 64, or installed via storage media such as a CD-ROM (Compact Disk Read Only Memory), a DVD-ROM (Digital Versatile Disk Read Only Memory), or an FD (Flexible Disk). The computer programs may be installed via a network such as the Internet. By executing computer program loaded in RAM 62, CPU 60 controls various resources and performs calculation. Thus, personal computer 1 has various functions which will be described later. Device driver 3 may be installed in a printer controller of ink jet printer 2. Alternatively, device driver 3 may be installed in another computer device. Similarly, application software 4 for controlling device driver 3 may be installed in the printer controller of ink jet printer 2. Alternatively, application software 4 may be installed in another computer device. The function of device driver 3 and application software 4 may be realized by hardware.

First, operation of device driver 3 is described with reference to Fig. 1. By executing device driver 3, CPU 60 converts the resolution of input RGB image data. The RGB image data is input from application software 4 in step S1. The RGB image data is image data having a plurality of pixels. Each pixel has a gradation value (brightness) in 8 bits data for each color (Red, Green, and Blue). The resolution of the RGB image data is converted into a resolution of the print image data. Although the maximum print resolution of ink jet printer 2 is 720 dpi, the resolution of the RGB image data is converted into 360 dpi, a half of the maximum print resolution, in this step. In step S2, CPU 60 converts the color space of the resolution converted RGB image data from RGB system into CMYK system. Thus, CPU 60 obtains CMYK image data.

In step S3, CPU 60 binarizes (quantizes) the CMYK image data. Each nozzle of ink jet printer 2 can eject predetermined radii (diameters) of dots. In the present embodiment, the nozzle can eject five radii of dots. "Binarization" is an operation to convert a pixel value of a target pixel from multilevel data into binary data. The binary data shows whether a predetermined radius of dot is ejected or not. In the present embodiment, the error diffusion method is employed for the binarization algorithm. The outline of the error diffusion method is as follows. The multilevel data is converted into binary data with reference to the threshold value. For example, if the multilevel value is above the threshold value, the binary data is determined as "1". If the multilevel value is below the threshold value, the binary data is determined as "0". According to the error diffusion method, the difference between the multilevel value and threshold value of the target pixel is diffused into unprocessed pixels. The description is given for an example of 8 bits (256-level) image data, pixel value "101" of a target pixel, and threshold value "127". The pixel value of the target pixel is converted into "0" because the pixel value is below the threshold value. According to a normal binarization, the difference "101" between the original pixel value (multilevel value) and the converted pixel value (binary value) is ignored. However, according to the error diffusion method, the difference is diffused into unprocessed neighbor (or adjacent) pixels of the target pixel by an error diffusion matrix. In the unprocessed neighbor pixels, the pixel value is updated by adding the diffused error to the original pixel value. For example, if the original pixel value of the right neighbor pixel of the target pixel is below the threshold value, the pixel value is converted into "0" in accordance with the normal binarization. However, if the updated pixel value of the right neighbor pixel is above the threshold value, the pixel value is converted into "1". Thus, the error diffusion method provides high quality binary image closer to the original multilevel image. As a result of binarization, image data is converted into binary data showing whether a predetermined radius of dot is formed or not. In the present embodiment, the binarization frequency corresponds to a half of the maximum print resolution, 360 dpi in this case. It is noted that another binarization algorithm such as dither matrix method may be employed.

Here, the term "ink dot" means a particle of liquid ink, and an image formed on a paper by the particle of liquid ink. In addition, "dot radius" and "dot diameter" means a radius and a diameter of the particle of liquid ink, respectively. The greater the dot radius (or dot diameter) becomes, the darker the density of a predetermined area including a plurality of ink dots becomes. The smaller the dot radius (or dot diameter) becomes, the thinner the density of a predetermined area including a plurality of ink dots becomes. The binarization means converting a pixel value into a density, and determining a dot diameter (dot radius) corresponding to the density. The details of the binarization will be described later.

The density corresponds to an area of printed image (ink dot) per unit area. With the unit area *L*², a density of image formed by an ink dot having minimum dot radius *R*ₘᵢₙ is π*R*²ₘᵢₙ/ *L*². For example, to obtain a density of 2π*R*²ₘᵢₙ / *L*² , dot radius R can satisfy *R* = √2·*R*ₘᵢₙ.

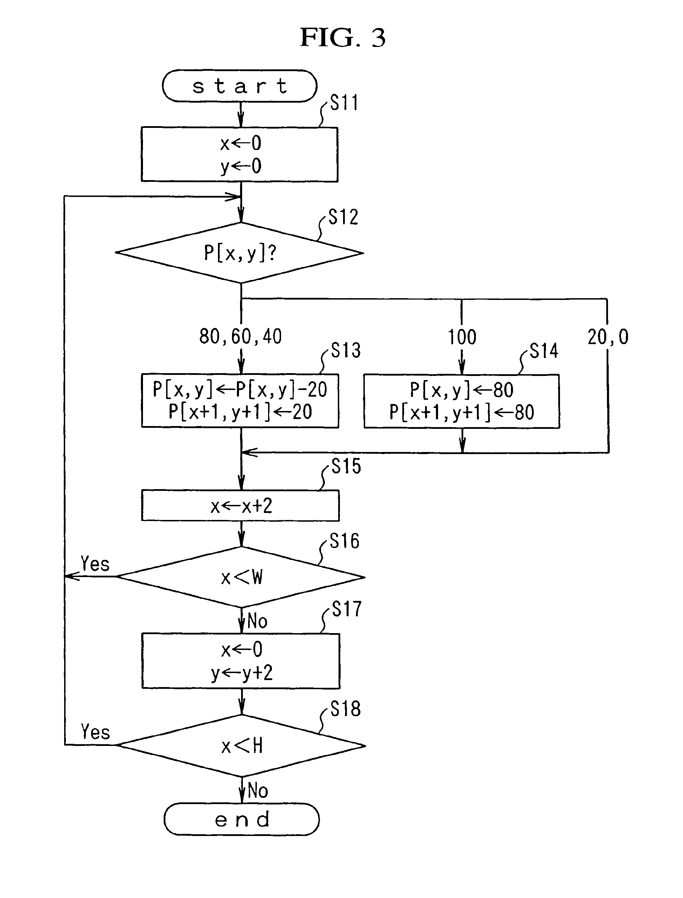

In step S4, CPU 60 generates expansion dots and standard dots by operations shown in Fig. 3. The expansion dots and the standard dots are made on the basis of the results of the binarization in step S3. "Unit dot" means an ink dot formed when the normal image processing method is applied. The unit dot is an ideal dot and is not actually formed on a paper in accordance with the present embodiment. The unit dot corresponds to a required density of 360 dpi. In the present embodiment, the unit dot is divided into two ink dots, the standard dot and the expansion dot. The standard dot is formed by printing head A of the line printing head shown in Fig. 12. The expansion dot is formed by printing head B. Namely, the expansion dot is formed at the nearest neighbor site of the standard dot. In addition, the expansion dot is formed in the line next to a line in which the standard dot is formed or in a line next to a line of standard dots in the direction of the print media feeding direction. A dot radius of a standard dot is greater than or equal to a dot radius of an expansion dot corresponding to the standard dot. A pair of a standard dot and an expansion dot consists of a bigger radius dot and a smaller radius dot. Because the resolution of the unit dot is a half of the maximum print resolution in the present embodiment, the resolution of an image formed by the standard dots and the expansion dots is 1/√2 of the maximum print resolution. Next, in step S5, CPU 60 converts the information of the standard dots and the expansion dots obtained in step S4 into machine codes in conformity with the ink jet printer 2, by rasterization. The machine code includes instructions for controlling ink jet printer 2. Then CPU 60 outputs the machine codes to the control unit of ink jet printer 2.

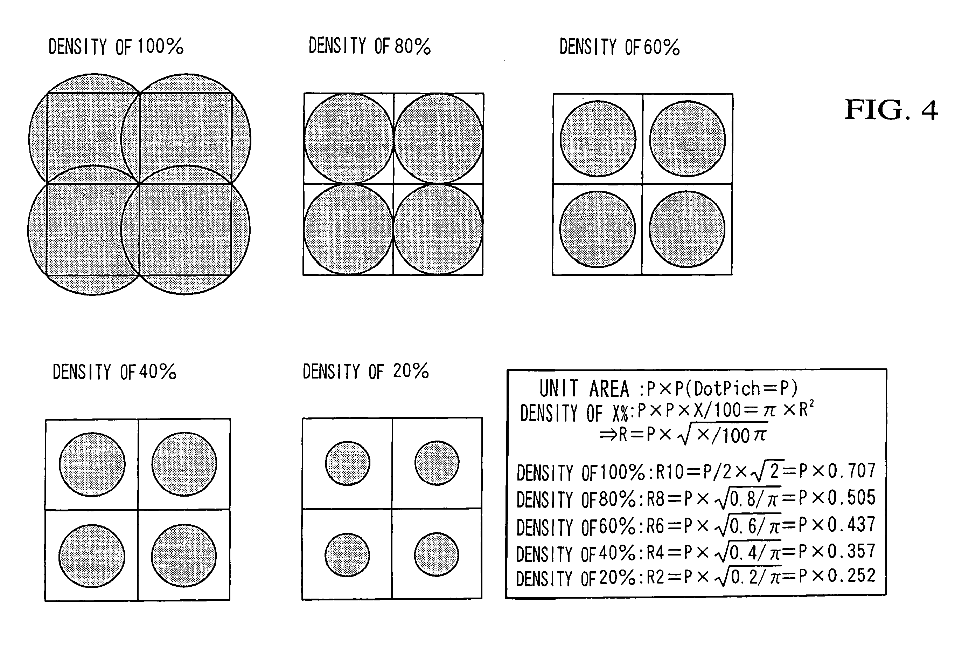

Fig. 4 shows a relation between a dot radius and density of a unit dot. Before describing operations for determining the dot radii of the standard dot and the expansion dot, a description of the relation between a dot radius and a required density will be given with reference to Fig. 4. In the present embodiment, required density of a pixel is 0%, 20%, 40%, 60%, 80%, and 100%. Namely, the required density has six levels. Each nozzles of ink jet printer 2 can eject six different radii of dots. When the required density is 0 %, no ink dot is formed on a paper. When the required density is 20 %, the dot radius is the minimum dot radius of ink jet printer 2. After the binarization in step S3 of Fig. 2, the resolution of the image data is 360 dpi, a half of the maximum print resolution. In Fig. 4, a lattice determines a position of a unit dot, which corresponds to 360 dpi. Ideally, a unit dot is formed at the center of a unit cell. The unit cell is a partition in the lattice, which is defined by four neighboring nodes. When the required density is 100 %, a dot to be formed on a paper covers the whole area of the unit cell. A length of a side of the unit cell, in other words, a dot pitch, is denoted as P. In the present embodiment, P is equal to 1 / 360 inch. As the area of a unit cell is P², dot radius R₁₀ corresponding to a density of 100 % is P / √2. When a density is *X %,* an area of the ink dot is *P*^{*2*} x *X*/100. Thus, a dot radius *R*ₓ corresponding to a density of *X%* is Px*√Xl*100/π. For example, dot radius *R*₈₀ corresponding to a density of 80 % is 0.505P, dot radius *R*₆₀ corresponding to a density of 6 % is 0.437P, dot radius *R*₄₀ corresponding to a density of 40 % is 0.357P, and dot radius *R*₂₀ corresponding to a density of 20 % is 0.252P. In the following descriptions, "X % dot radius" means a dot radius of a unit dot, a required density of which is X%.

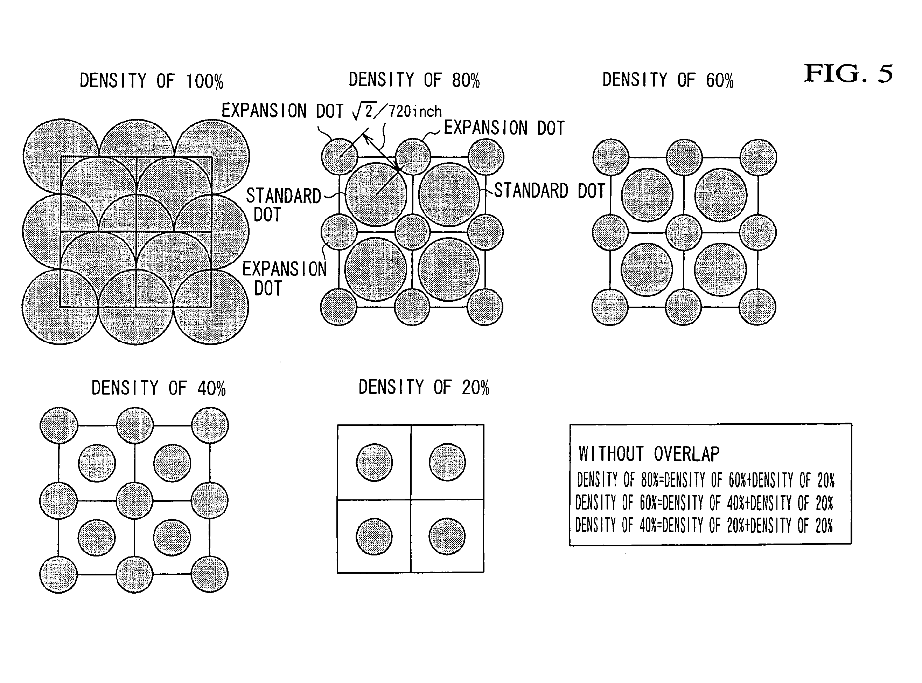

Fig. 5 shows an example of the standard dots and the expansion dots. In Fig. 5, the lattice corresponds to a resolution of 360 dpi, a half of the maximum print resolution. In the example shown in Fig. 5, a standard dot is formed at the center of a unit cell, and an expansion dot is formed at a corner of a unit cell. For example, when the required density is 20 %, a standard dot having a dot radius corresponding to a density of 20 % is formed, and no expansion dot is formed. When the required density is 40 %, a standard dot and an expansion dot having a dot radius corresponding to a density of 20 % are formed. When the required density is 80 %, a standard dot having a dot radius corresponding to a density of 60 % are formed, and an expansion dot having a dot radius corresponding to a density of 20 % are formed. When the required density is 100 %, a standard dot having a dot radius corresponding to a density of 80 % are formed, and an expansion dots having a dot radius corresponding to a density of 80 % are formed. The standard dots and the expansion dots are formed to satisfy the following conditions. 1) A standard dot is formed on a different line from a line on which the expansion dots are formed. 2) An expansion dot is formed by a nozzle next to a nozzle that outputs a standard dot (precisely in the maximum print resolution). 3) A dot radius of a standard dot is not smaller that that of an expansion dot corresponding to the standard dot. In other words, a dot radius of a standard dot is greater than or equal to a dot radius of an expansion dot corresponding to the standard dot. 4) An area of ink dots, including a standard dot and expansion dots, per a unit cell is equal to the required density for the corresponding unit dot.

In the present embodiment, personal computer 1 stores in storage device 70 or ROM 64 a dot division table for dividing a unit dot into a standard dot and an expansion dot. The dot division table stores a dot radius of a unit dot (in other words, a required density) and dot radii of corresponding standard dots and expansion dots. Personal computer 1 may store a function that outputs dot radii of a standard dot and an expansion dot in response to a dot radius of a unit dot (in other words, a required density), instead of the dot division table.

As shown by a pattern with a required density of 80 % in Fig. 5, the standard dots and the expansion dots are laid out by a staggered arrangement on a lattice corresponding to the maximum print resolution. In other words, the standard dots and the expansion dots are laid out on the lattice corresponding to the maximum print resolution at intervals of two lattice points. In the present embodiment, a distance between a standard dot and an expansion dot is √2/720 inch. In other words, the resolution is 720/√2 dpi.

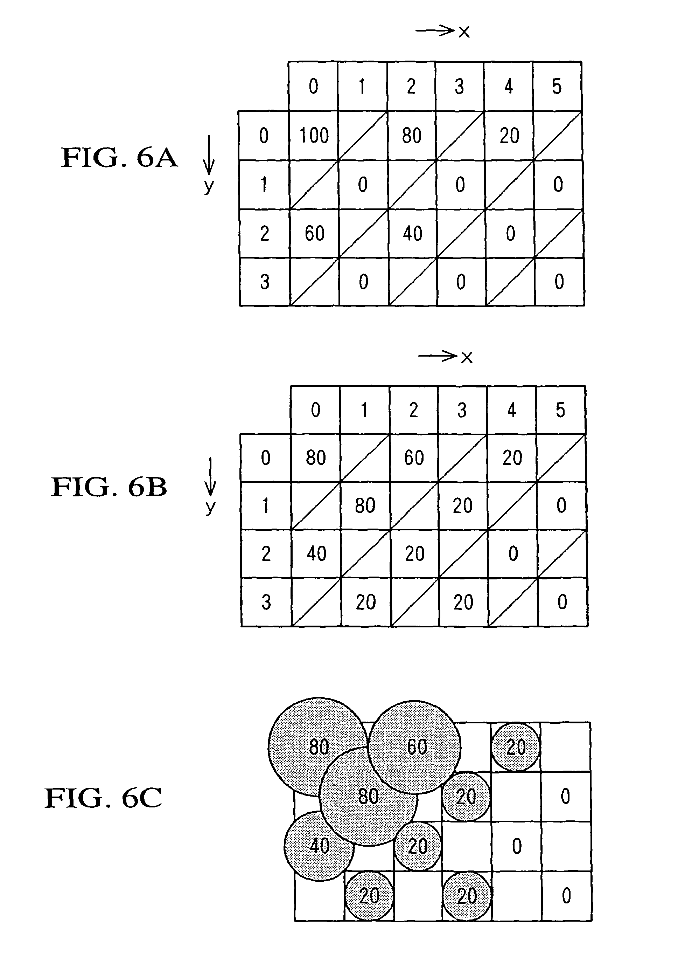

A description will be given for operations to determine a dot radius of an expansion dot with reference to Fig. 3. In the following descriptions, parameter *x* and *y* denote coordinates of dots in a lattice corresponding to the maximum print resolution. For example, as shown in Figs. 6A - 6C, the left upper corner of the matrix furnishes the origin point of the coordinate system. The *x*-axis is determined to the right direction, and the *y*-axis is determined to the downward direction. In Fig. 6A, a dot whose x and *y* coordinates are both even numbers is a standard dot. In addition, a dot whose x and *y* coordinates are both odd numbers is an expansion dot.

In step S 11, CPU 60 initializes x and y coordinates stored in RAM 62, to zero. In step S 12, CPU 60 determines the next operation to be performed, on the basis of required density *P(x, y).* Required density *P(x, y)* is obtained in step S3 of Fig. 1. Specifically, in a case that the required density is 80 %, 60 %, or 40 %, CPU 60 proceeds to the operation of step S 13. In a case that the required density is 100 %, CPU 60 proceeds to the operation of step S 14. In a case that the required density is 20 % or 0 %, CPU 60 proceeds to the operation of step S15.

In step S 13, CPU 60 determines dot radii of a standard dot and an expansion dot as follows. CPU 60 updates the required density *P(x, y)* by subtracting 20 points from the original required density *P(x, y).* Thus, CPU 60 determines the dot radius of the standard dot. Furthermore, CPU 60 determines the required density *P(x+*1*, y+*1*)* to 20 %. In other words, the required density of the expansion dot is determined as 20 %. Thus, CPU 60 determines the dot radius of the expansion dot. After completing the operations in step S13, CPU 60 proceeds to the operation of step S 15.

In step S14, CPU 60 determines dot radii of a standard dot and an expansion dot as follows. CPU 60 determines the required density *P(x, y)* to 80 %. Thus, CPU 60 determines the dot radius of the standard dot. Furthermore, CPU 60 determines the required density *P(x+*1*, y+1)* to 80 %. Thus, CPU 60 determines the dot radius of the expansion dot. After completing the operation in step S 14, CPU 60 proceeds to the operation of step S15.

In step S 15, CPU 60 updates the x coordinate as x *= x* + 2. Next, in step S16, CPU 60 determines whether the operations are completed for a line. When x coordinate is less than print width W (in step S16: YES), CPU 60 repeats the operations of steps S12 - S 15. When x coordinate is greater than or equal to print width *W* (in step S16: NO), CPU 60 proceeds to the operation of step S 17. In step S 17, CPU 60 updates x and *y* coordinates to proceed to the operation of the next line. Specifically, CPU 60 initializes x to zero, and updates y as *y = y* + 2. Next, in step S 18, CPU 60 determines whether the operations are completed for all lines. In other words, CPU 60 determines whether y is less than print length H. When *y* is less than H (in step S 18: YES), CPU 60 repeats the operations of steps S12 - S17. When *y* is greater than or equal to *H* (in step S 18: NO), CPU 60 terminates the operations in Fig. 3.

Fig. 6A shows the required density before the standard dot and the expansion dot are generated. In other words, Fig. 6A shows the image data after the binarization. Fig. 6B shows the required density after the standard dot and the expansion dot are generated. For example, as shown in Fig. 6A, because required density *P*(0, 0) is 100 %, the dot radius of the standard dot to be formed at location (0, 0) is determined as 80 % as shown in Fig. 6B. Furthermore, the dot radius of the expansion dot to be formed at location (1, 1) is determined as 20 %. Similarly, as shown in Fig. 6A, because required density P(2, 0) is 80 %, the dot radius of the standard dot to be formed at location (2, 0) is determined as 60 % as shown in Fig. 6B. Furthermore, the dot radius of the expansion dot to be formed at location (3, 1) is determined as 20 %. Similarly, as shown in Fig. 6A, because required density P(4, 0) is 20 %, the dot radius of the standard dot to be formed at location (4, 0) is determined as 20 % as shown in Fig. 6B. Furthermore, the dot radius of the expansion dot to be formed at location (5, 1) is determined as 0 %. In other words, no expansion dot is formed at location (5, 1). Similarly, as shown in Fig. 6A, because required density P(0, 2) is 60 %, the dot radius of the standard dot to be formed at location (0, 2) is determined as 40 % as shown in Fig. 6B. Furthermore, the dot radius of the expansion dot to be formed at location (1, 3) is determined as 20 %. Similarly, as shown in Fig. 6A, because required density P(2, 2) is 40 %, the dot radius of the standard dot to be formed at location (2, 2) is determined as 20 % as shown in Fig. 6B. Furthermore, the dot radius of the expansion dot to be formed at location (3, 3) is determined as 20 %. Similarly, as shown in Fig. 6A, because required density P(4, 2) is 0 %, the dot radius of the standard dot to be formed at location (4, 2) is determined as 0 % as shown in Fig. 6B. Furthermore, the dot radius of the expansion dot to be formed at location (5, 3) is determined as 0 %. In other words, no standard dot and no expansion dot are formed at coordinates (4, 2) and (5, 3). In the present embodiment, the dot radius of the expansion dot is equal to the minimum dot radius of ink jet printer 2.

Fig. 6C shows the standard dots and the expansion dots formed in accordance with the present embodiment, based on the required density shown in Fig. 6B. The standard dots and the expansion dots are laid out in a staggered arrangement on the lattice corresponding to the maximum print resolution of ink jet printer 2. Therefore, the resolution of an image formed by ink jet printer 2 is 1/√2 of the maximum print resolution. In this case, the binarization frequency corresponds to a half of the maximum print resolution as described above. According to ink jet printer 2 of the present embodiment, the decrease of the binarization frequency is greater than the decrease of the resolution.

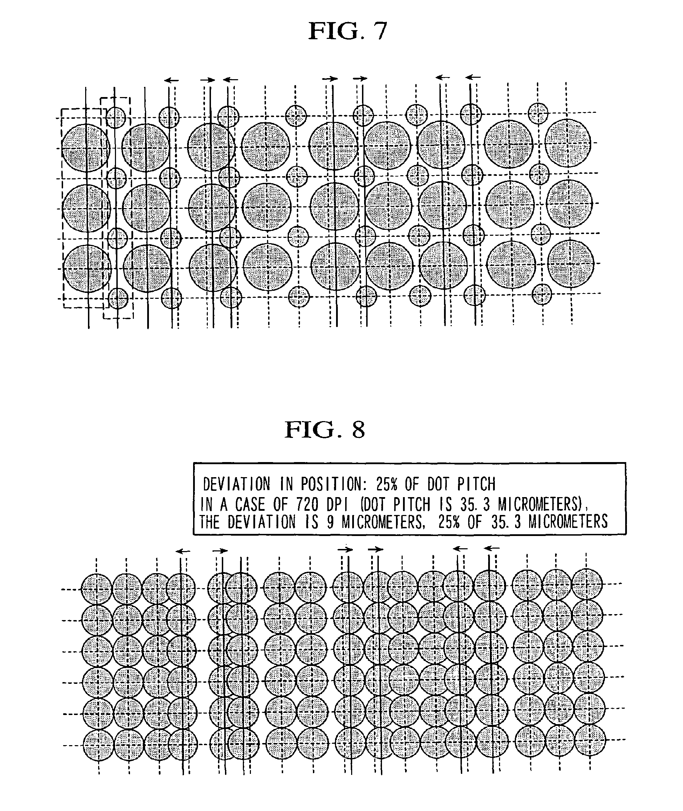

Fig. 7 shows an example pattern including the standard dots and the expansion dots formed in accordance with the present embodiment. In Fig. 7, the bigger dots are the standard dots and the smaller dots are the expansion dots. Fig. 7 shows an example in which the required densities are constant at 80 % through the whole pattern. As described in Fig. 5, the dot radius of the standard dot is 60 %, and the dot radius of the expansion dot is 20 %. In Fig. 7, dotted lines show ideal positions of dots, and solid lines show actual positions of dots. Arrows show the difference between the ideal position and the actual position. The difference occurs in accordance with, for example, the above described "splash bending". In a case that the difference is 25 % for dot pitch and the dot pitch is 35.3 micrometers (corresponding to 720 dpi), the difference is 9 micrometers. This difference is not small, but no "light band" or no "dark band" appears in the pattern of Fig. 7. In other words, no "banding" appears in the pattern. This is because of the effect of the expansion dots.

Here, "banding" is a phenomenon in which a light band or a dark band appears in a print product. The banding is caused by, for example, "splash bending". The "splash bending" is a phenomenon in which the actual position of a formed dot is different from the ideal position. The difference is caused by skew of a nozzle. The nozzle ejects an ink dot even in a case that the splash bending occurs. However, the position of the ink dot has deviation compared with the ideal position. The light band corresponds to an area in which dot pitch, in other words, a distance between two neighboring dots, is longer than the ideal dot pitch. The dark band corresponds to an area in which a dot pitch is shorter than the ideal dot pitch.

Fig. 8 shows an example pattern formed in accordance with the related art. In Fig. 8, the difference between the ideal position and the actual position is the same as that of Fig. 7. The resolution is 720 dpi and the required density is 80 %. As can be seen in Fig. 8, light bands and dark bands appear in the pattern. In other words, the banding appears in accordance with the related art.

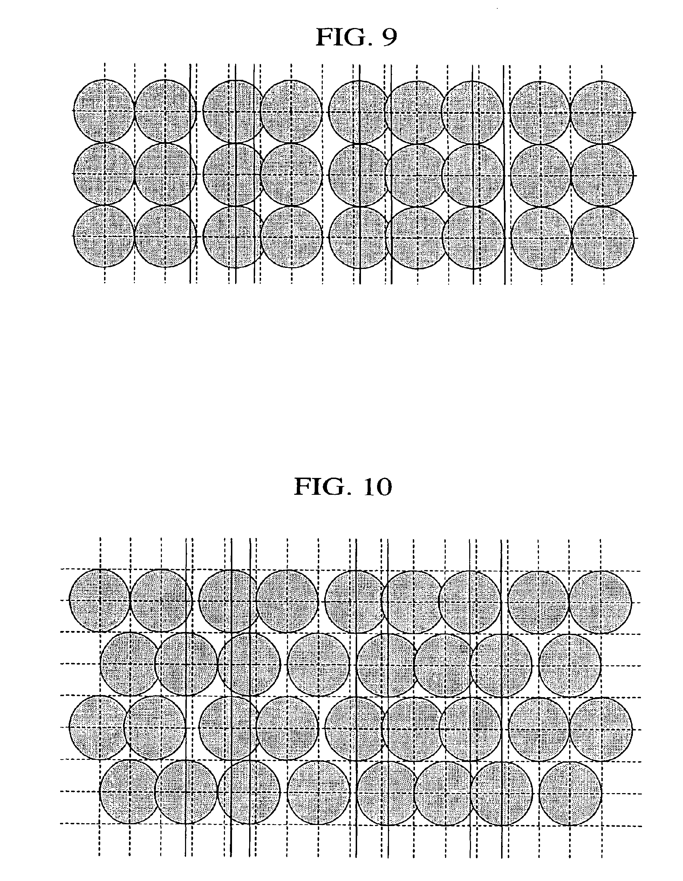

Fig. 9 shows another example pattern formed in accordance with the related art. In Fig. 9, the difference between the ideal position and the actual position is the same as that of Figs. 7 and 8. The resolution is 360 dpi, a half of the maximum resolution, and the required density is 80 %. Similarly to Fig. 8, the banding appears in the pattern because the difference is the same as that of Fig. 8. Furthermore, the granularity of image is worse than that of the present embodiment, because the dot radius is bigger and the dot pitch is longer. In other words, the pattern shown in Fig. 9 has low image quality in view of granularity and banding.

Fig. 10 shows another example pattern. In Fig. 10, dots are laid out in a staggered arrangement. The resolution is 360 dpi. The pattern shown in Fig. 10 is generated by staggering a dot line of the pattern shown in Fig. 9. The lines are staggered by 1/720 inch (corresponding to 720 dpi) every two lines. As shown in Fig. 10, no banding appears in the pattern. However, the dot radius and the dot pitch are the same as those of Fig. 9. Therefore, the granularity of image is worse than that of the present embodiment.

Fig. 11 shows an example pattern formed in accordance with the related art, JP-A-2003-094620. According to JP-A-2003-094620, dots are laid out in a staggered arrangement on a lattice corresponding to 720 dpi, the maximum print resolution. The dot pitch is √2/720 inch. In other words, the resolution of the image is 720/√2 dpi. The dot pitch and the resolution are the same as those of the present embodiment. However, the binarization frequency corresponds to 1/√2 of the maximum print resolution in accordance with JP-A-2003-094620. The binarization frequency is greater than that of the present embodiment. Therefore, JP-A-2003-094620 cannot provide both high speed operation and high quality image.

As described above, the image processing device in accordance with the present embodiment provides the following operations. The pixel value of the image data is converted into a dot radius (in other words, required density). The resolution of the image after the conversion (in other words, binarization) is smaller than the maximum print resolution at least in a direction orthogonal to the print media feeding direction. In the present embodiment, the resolution of the image after the binarization is a half of the maximum print resolution. The standard dots and the expansion dots are generated so as to maintain the required density. The expansion dots are generated at different positions from the standard dots. Therefore, the binarization frequency decreases to a half of that corresponding to the maximum print resolution. Furthermore, high image quality in view of granularity is maintained. In addition, banding is reduced.

Additionally, a unit dot is divided into a standard dot and an expansion dot. The expansion dot is formed at a location next to the standard dot. Therefore, a density per a unit cell is not changed and the image quality is maintained.

Additionally, the expansion dot is formed on a line next to a line on which the standard dots are formed. In other words, the expansion dot is formed at the center between two neighboring standard dots. Therefore, banding is reduced.

Additionally, a pair of a standard dot and corresponding expansion dot includes a bigger dot and a smaller dot. The image quality is maintained by the bigger dots and the banding is reduced by the smaller dots.

Additionally, the dot radius of the standard dot is an integer multiple of the minimum dot radii of the nozzle, and the dot radius of the expansion dot is the minimum dot radius. The required density for the standard dot can be determined by subtracting the density corresponding to the minimum dot radius from the required density of the unit dot. Therefore, the calculation load can be reduced.

Furthermore, as shown in Fig. 5, printing head A shown in Fig. 12 outputs the standard dot, whose dot radius corresponds to a density of 80 %, 60 %, 40 %, or 20 %. Similarly, printing head B outputs the expansion dot, whose dot radius corresponds to a density of 80 % or 20 %. In other words, the standard dots and the expansion dots are formed by different nozzles. The output characteristic of the nozzles for the standard dot and nozzles for the expansion dot may be different from each other. The nozzles for the expansion dot may be manufactured with low accuracy. The low accuracy nozzle can be manufactured at a low cost.

2. Second Embodiment

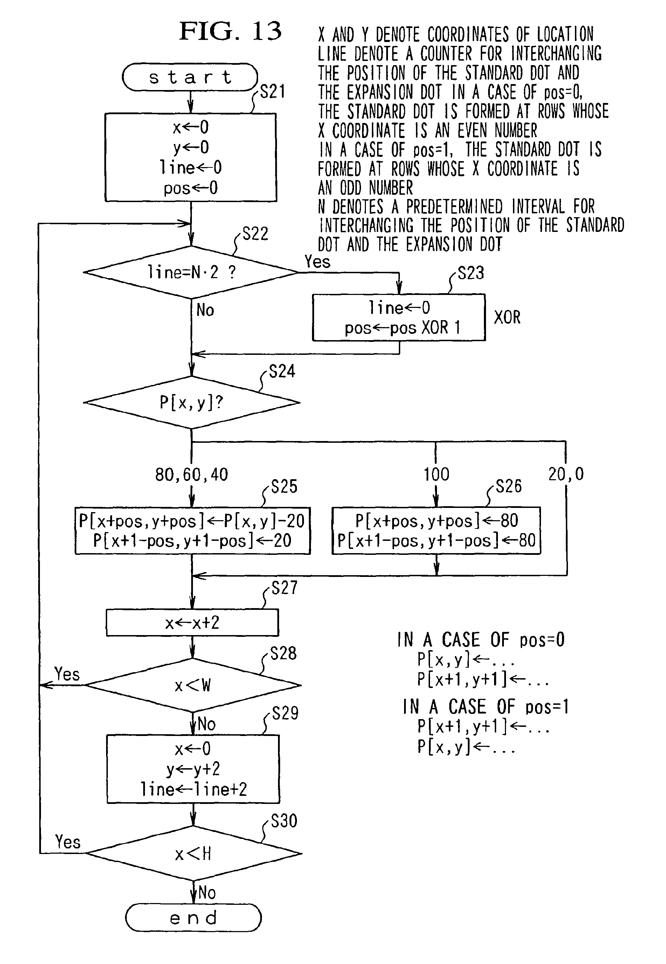

Now, the second embodiment of the invention will be described. The configurations of the printing system and the personal computer are the same as those described in the first embodiment, as shown in Figs. 1 and 2. In addition, the functions of a device driver to control the ink jet printer is similar to that described in the first embodiment, as shown in Fig. 1. In the following description, components common with the first embodiment will be referred to with common reference numerals. The difference between the first embodiment and the second embodiment is the operations of step S4. Specifically, the operations of step S4 change from Fig. 3 to Fig. 13. The principle for generating expansion dots is the same as that of the first embodiment shown in Figs. 4 and 5. In the present embodiment, the positions of the standard dots and the expansion dots are interchanged in a predetermined interval. Fig. 13 shows an example in which the positions of the standard dots and the expansion dots are interchanged every three dots.

In Fig. 13, "line" denotes a counter to determine a timing of interchanging the positions of the standard dots and the expansion dots. In addition, *"pos"* denotes a flag to determine the position of the standard dots. For example, in a case of *pos =* 0, the standard dots are formed on even columns (in other words, positions at which x coordinates is an even number). In a case of *pos =* 1, the standard dots are formed on odd columns. Furthermore, "*N*" denotes an interval to interchange the positions of the standard dots and the expansion dots. In the present embodiment, the description will be given for an example of *N* = 3.

First, in step S21, CPU 60 initializes x and *y* coordinates stored in RAM 62. Furthermore, CPU 60 resets counter line and flag *pos* as zero. Next, in step S22, CPU 60 determines whether one cycle of the operation is completed, in other words, CPU 60 determines whether counter line equals to 2N (double N). When counter line is equal to 2N, CPU 60 proceeds the operation to step S23. When counter line is not equal to 2N, CPU 60 proceeds the operation to step S24. In step S23, CPU 60 resets counter line as zero. Furthermore, CPU 60 inverts flag *pos* by using exclusive disjunction (XOR). In step S24, CPU 60 determines the operation to follow in response to the required density *P(x, y).* Specifically, in a case that the required density is 80 %, 60 %, or 40 %, CPU 60 proceeds to the operation of step S25. In a case that the required density is 100 %, CPU 60 proceeds to the operation of step S26. In a case that the required density is 20 % or 0 %, CPU 60 proceeds to the operation of step S27.

In step S25, CPU 60 determines dot radii of the standard dots and the expansion dots as follows. CPU 60 calculates required density *P(x+pos, y+pos)* by subtracting 20 points from *P(x, y).* Thus, CPU 60 determines the dot radius of a standard dot at location *(x+pos, y+pos).* In a case *of pos* = 0, the standard dot is formed at location *(x, y).* In a case *of pos =* 1, the standard dot is formed at location *(x+*1, *y+*1)*.* Furthermore, CPU 60 determines required density P(x+1-*pos, y+* 1*-pos)* to 20 %. Thus, CPU 60 determines the dot radius of an expansion dot at location (x+1-*pos, y+*1*-pos).* After completing the operations in step S25, CPU 60 proceeds the operation to step S27.

In step S26, CPU 60 calculates required density *P(x+pos, y+pos)* as 80 %. Thus, CPU 60 determines the dot radius of a standard dot at the location *(x+pos, y+pos*)*.* Furthermore, CPU 60 determines required density *P(x+*1*-pos, y+*1*- pos*) to 80%. Thus, CPU 60 determines the dot radius of an expansion dot at location (*x*+1-*pos, y+*1*-pos*)*.* After completing the operations in step S26, CPU 60 proceeds to the operation of step S27.

In step S27, CPU 60 updates x coordinate as x = x + 2. In step S28, CPU 60 determines whether the operations are completed for a line. In other words, CPU 60 determines whether x coordinate is less than print width *W.* When x coordinate is less than W (in step S28: YES), CPU 60 repeats the operations of steps S22 - S27. When x coordinate is greater than or equal to *W* (in step S28: NO), CPU 60 proceeds to the operation of step S29. In step S29, CPU 60 initializes x coordinate as zero. Furthermore, CPU 60 updates *y* coordinate and counter line as *y = y* + 2 and line = line + 2, respectively. Next, in step S30, CPU 60 determines whether the operations are completed for all lines. In other words, CPU 60 determines whether *y* coordinate is less than print length *H*. When y coordinate is less than H (in step S30: YES), CPU 60 repeats the operations of steps S22 - S29. When y coordinate is greater than or equal to *H* (in step S30: NO), CPU 60 terminates the operations.

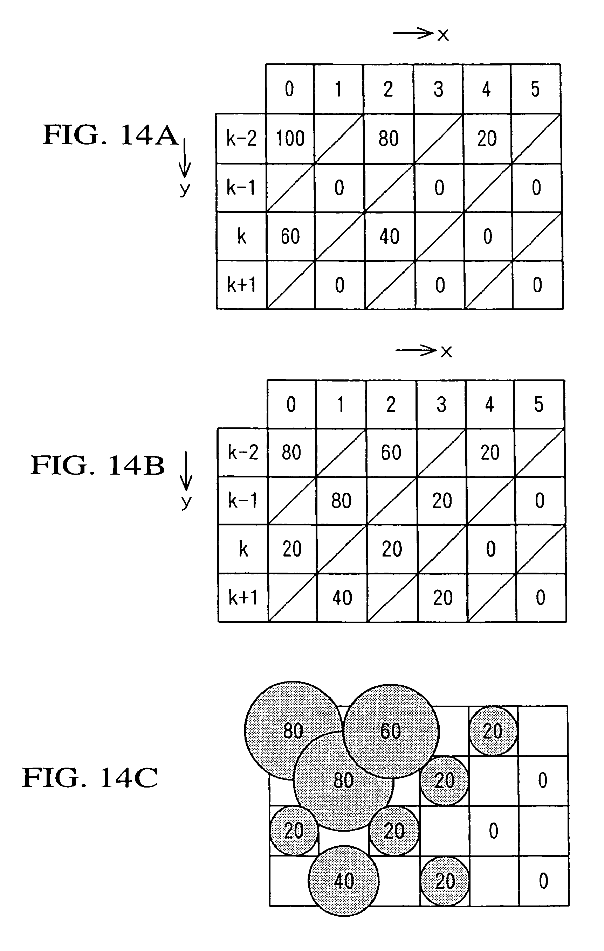

Fig. 14A shows the required densities before the standard dots and the expansion dots are generated. Fig. 14B shows the required densities after the standard dots and the expansion dots have been generated. In Figs. 14A-C, *k* satisfies *k* = *2nN.* Here, n is a natural number. For example, in a case that *pos =* 0 *at y = k -* 2, the standard dots are formed at locations *of y = k -* 2 and the expansion dots are formed at locations of *y = k -* 1*.* For example, as shown in Fig. 14A, because required density P(0, *k-*2) is 100 %, the dot radius of the standard dot to be formed at location (0, *k*-2) is determined as 80 % as shown in Fig. 14B. Furthermore, the dot radius of the expansion dot to be formed at location (1, *k*-1) is determined as 20 %. Similarly, as shown in Fig. 14A, because required density P(2, *k-2)* is 80 %, the dot radius of the standard dot to be formed at location (2, *k*-2) is determined as 60 % as shown in Fig. 14B. Furthermore, the dot radius of the expansion dot to be formed at location (3, *k-*1) is determined as 20 %. Similarly, as shown in Fig. 14A, because required density P(4, *k-*2*)* is 20 %, the dot radius of the standard dot to be formed at location (4, *k*-2) is determined as 20 % as shown in Fig. 14B. Furthermore, the dot radius of the expansion dot to be formed at location (5, *k*-1) is determined as 0 %. In other words, no expansion dot is formed at location (5, *k*-1).

In a case of *pos* = 1 *at y* = *k,* the standard dots are formed on lines *of y = k* + 1 and the expansion dots are formed on lines *of y = k.* For example, because required density P(0, *k)* is 60 % as shown in Fig. 14A, the dot radius of the expansion dot to be formed at location (0, *k*) is determined as 20 % as shown in Fig. 14B. Furthermore, the dot radius of the standard dot to be formed at location (1, *k+*1) is determined as 40 %. Similarly, because required density *P(2, k)* is 40 % as shown in Fig. 14A, the dot radius of the expansion dot to be formed at location (2, *k*) is determined as 20 % as shown in Fig. 14B. Furthermore, the dot radius of the standard dot to be formed at location (3, *k+*1) is determined as 20 %. Similarly, because required density P(4, *k)* is 0 % as shown in Fig. 14A, the dot radius of the expansion dot to be formed at location (4, *k*) is determined as 0 % as shown in Fig. 14B. Furthermore, the dot radius of the standard dot to be formed at location (5, *k+*1) is determined as 0 %. In other words, no expansion dot and no standard dot are formed at locations (4, *k*) and (5, *k*+1), respectively.

Fig. 14C shows an example pattern including the standard dots and the expansion dot formed in accordance with the present embodiment. The standard dots and the expansion dots are formed in a staggered arrangement on a lattice corresponding to the maximum print resolution. The resolution of the image formed in accordance with the present embodiment is 1/√2 of the maximum print resolution, while the binarization frequency corresponds to a half of the maximum print resolution. The decrease of the binarization frequency is greater than the decrease of the resolution. Additionally, the layout of the standard dots and the expansion dots are interchanged at a predetermined interval, for example, every three lines. The successive dots having the same microscopic density do not appear in the print media feeding direction, in other words, the direction in which the banding appears. Therefore, the banding is reduced in an effective manner.

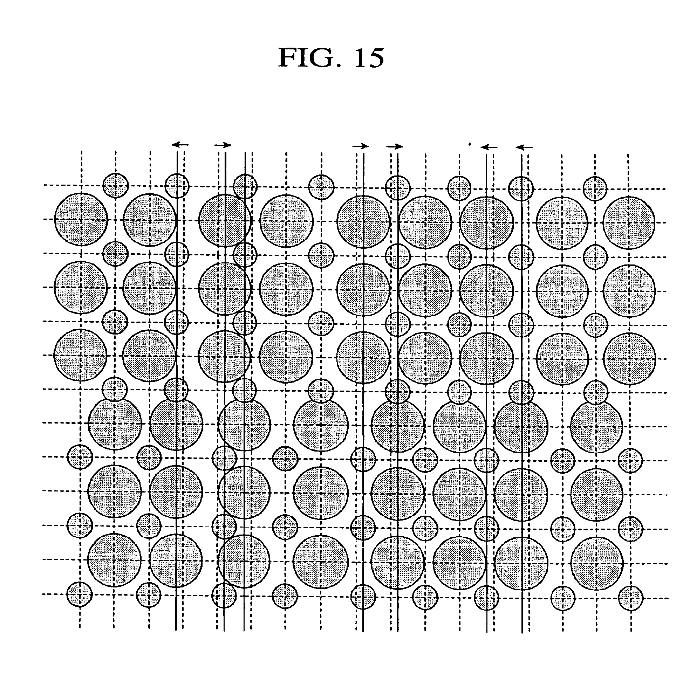

Fig. 15 shows an example pattern including the standard dots and the expansion dots in accordance with the present embodiment. In Fig. 15, the bigger dots are the standard dots and the smaller dots are the expansion dots. Fig. 15 shows an example in which the required densities are constant at 80 % through the whole pattern. The print media feeding direction is downward in Fig. 15. As described in Fig. 5, the dot radius of the standard dot is 60 %, and the dot radius of the expansion dot is 20 %. In Fig. 15, dotted lines show ideal positions of dots, and solid lines show actual positions of dots. Arrows show the difference between the ideal position and the actual position. The difference occurs in accordance with, for example, the above described "splash bending" as described in the first embodiment. Fig. 15 shows an example in which the difference is 25 % for dot pitch. As shown in Fig. 15, the banding is reduced in an effective manner because the layout of the standard dots and the expansion dots are interchanged every three lines.

3. Third Embodiment

Now, the third embodiment of the invention will be described. The configurations of the printing system and the personal computer are the same as those of the first embodiment, as shown in Figs. 1 and 2. Although, the functions of device driver to control the ink jet printer is almost similar to that of the first embodiment, as shown in Fig. 1, there are some differences between the first embodiment and the third embodiment. First, in step S1, the converted resolution in the print media feeding direction, namely in the direction of *y*-axis in the first and the second embodiment, is the maximum print resolution. The direction of nozzle array, namely in the *x*-axis direction, is a half of the maximum print resolution similar to the first and the second embodiment. Second, from Fig. 3 to Fig. 16 there are changes in the operations of step S4. The principle for generating expansion dots is the same as that of the first embodiment shown in Figs. 4 and 5. In the present embodiment, the standard dots and the expansion dots are lined up in the direction of nozzle array (or in the direction orthogonal to the print media feeding direction), namely in the direction ofx-axis. Furthermore, the positions of the standard dots and the expansion dots are interchanged. The decision of flag *pos* is the same as that of the second embodiment. In addition, elements common to both first and second embodiments are referred to with the same reference numerals.

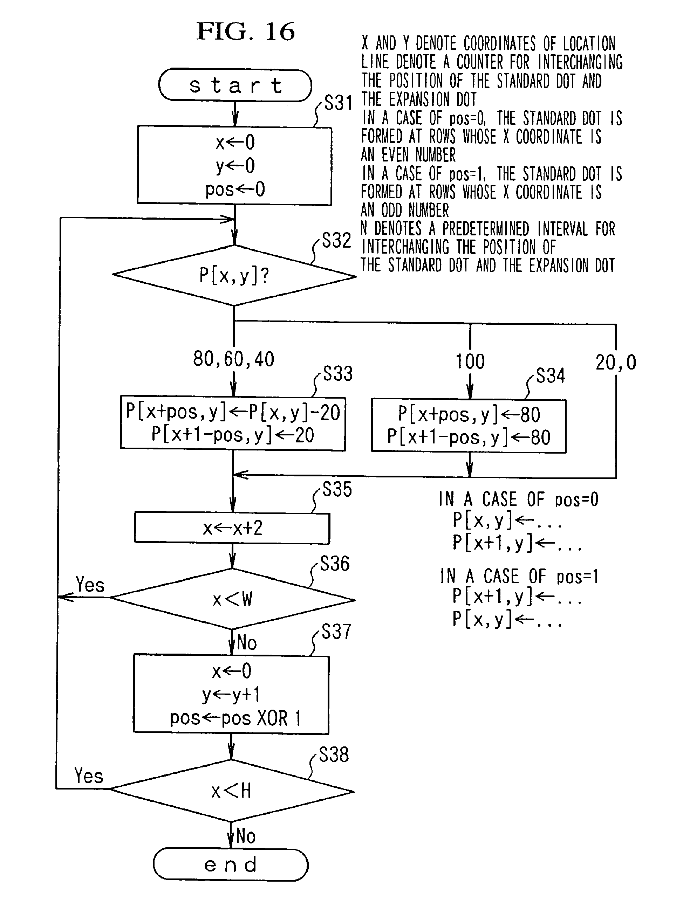

Fig. 16 shows a flow chart illustrating operations for generating the expansion dots in accordance with the present embodiment. In step S31, CPU 60 initializes x and *y* coordinates stored in RAM 62 as zero. Furthermore, CPU 60 initializes flag *pos* as zero. Next, in step S32, CPU 60 determines the operation to follow, in response to the required density *P(x, y)* obtained in step S2 of Fig. 1. Specifically, in a case that the required density is 80 %, 60 %, or 40 %, CPU 60 proceeds to the operation of step S33. In a case that the required density is 100 %, CPU 60 proceeds to the operation of step S34. In a case that the required density is 20 % or 0 %, CPU 60 proceeds to the operation of step S35.

In step S33, CPU 60 determines dot radii of the standard dot and the expansion dot as follows. CPU 60 calculates required density *P(x+pos, y)* by subtracting 20 points from *P(x, y).* Thus, CPU 60 determines the dot radius of a standard dot at the location *(x+pos, y).* Furthermore, CPU 60 determines required density *P(x+*1*-pos, y)* to 20 %. Thus, CPU 60 determines the dot radius of an expansion dot at the location *(*x+1*-pos, y).* After completing the operations in step S33, CPU 60 proceeds to the operation of step S35.

In step S34, CPU 60 determines dot radii of the standard dot to 80 %. Thus, CPU 60 determines the dot radius of a standard dot at the location *(x+pos, y).* Furthermore, CPU 60 determines required density P(x+1*-pos, y)* to 80 %. Thus, CPU 60 determines the dot radius of an expansion dot at the location (x+1*-pos, y).* After completing the operations of step S34, CPU 60 proceeds to the operation of step S35.

In step S35, CPU 60 updates x coordinate as x = x + 2. In step S36, CPU 60 determines whether the operations are completed for a line. In other words, CPU 60 determines whether x coordinate is less than print width *W*. When x coordinate is less than *W* (in step S36: YES), CPU 60 repeats the operations of steps S32 - S35. When x coordinate is greater than or equal to *W* (in step S36: NO), CPU 60 proceeds to the operation of step S37. In step S37, CPU 60 initializes x coordinate as zero. Furthermore, CPU 60 updates *y* coordinate and counter line as *y = y* + 2. CPU 60 inverts flag *pos* by using exclusive disjunction (XOR). Next, in step S38, CPU 60 determines whether the operations are completed for all lines. In other words, CPU 60 determines whether *y* coordinate is less than print length *H*. When *y* coordinate is less than H (in step S38: YES), CPU 60 repeats the operations of steps S32 - S37. When *y* coordinate is greater than or equal to H (in step S38: NO), CPU 60 terminates the operations.

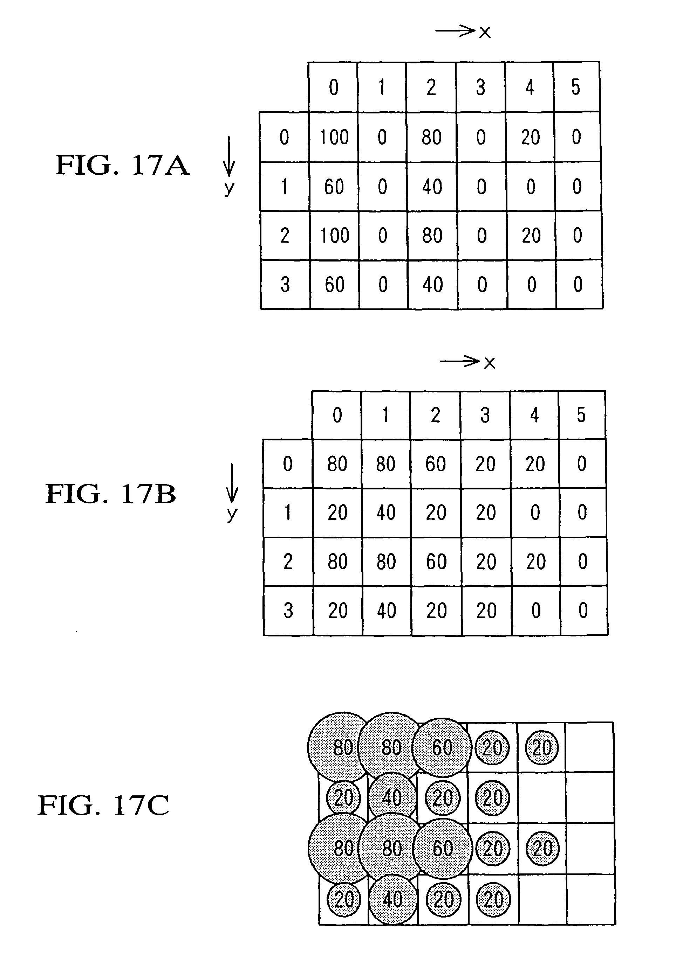

Figs. 17A - 17C show how to calculate the dot radii of the standard dot and the expansion dot. Fig. 17A shows the required densities before the standard dots and the expansion dots are generated. Fig. 17B shows the required densities after the standard dots and the expansion dots have been generated. Figs. 17A - 17C show an example, in which flag *pos* satisfies *pos* = 0 when *y* coordinates satisfies *y* = 0. For example, because required density P(0, 0) is 100 % as shown in Fig. 17A, the dot radius of the standard dot to be formed at location (0, 0) is determined as 80 % as shown in Fig. 17B. Furthermore, the dot radius of the expansion dot to be formed at location (1, 0), which is the right neighbor of the standard dot, is determined as 20 %. Similarly, because required density P(2, 0) is 80 % as shown in Fig. 17A, the dot radius of the standard dot to be formed at location (2, 0) is determined as 60 % as shown in Fig. 17B. Furthermore, the dot radius of the expansion dot to be formed at location (3, 0) is determined as 20 %. Similarly, because required density P(4, 0) is 20 % as shown in Fig. 17A, the dot radius of the standard dot to be formed at location (4, 0) is determined as 20 % as shown in Fig. 17B. Furthermore, the dot radius of the expansion dot to be formed at location (5, 0) is determined as 0 %. In other words, no expansion dot is formed at location (5, 0).

For a line *of y* = 1, flag *pos* is updated as *pos* = 1, because flag *pos* is inverted at every line. Comparing the line of *y* = 1 with that of *y* = 0, the position of the standard dot and that of the expansion dot are interchanged. In other words, the expansion dots are formed at locations where *y* is an odd number. For example, because required density P(0, 1) is 60 % as shown in Fig. 17A, the dot radius of the expansion dot to be formed at location (0, 1) is determined as 20 % as shown in Fig. 17B. Furthermore, the dot radius of the standard dot to be formed at location (1, 1), which is the right neighbor of the expansion dot, is determined as 40 %. Similarly, because required density P(2, 1) is 40 % as shown in Fig. 17A, the dot radius of the expansion dot to be formed at location (2, 1) is determined as 20 % as shown in Fig. 17B. Furthermore, the dot radius of the standard dot to be formed at location (3, 1) is determined as 20 %. Similarly, because required density P(4, 1) is 0 % as shown in Fig. 17A, the dot radius of the expansion dot to be formed at location (4, 1) is determined as 0 % as shown in Fig. 17B. Furthermore, the dot radius of the standard dot to be formed at location (5, 1) is determined as 0 %. In other words, no expansion dot and no standard dot are formed at locations (4, 1) and (5, 1).

For a line of *y* = 2, flag *pos* is updated as *pos* = 0 again. In other words, the position of the standard dot and that of the expansion dot are interchanged. For example, because required density P(0, 2) is 100 % as shown in Fig. 17A, the dot radius of the standard dot to be formed at location (0, 2) is determined as 80 % as shown in Fig. 17B. Furthermore, the dot radius of the expansion dot to be formed at location (1, 2), which is the right neighbor of the standard dot, is determined as 80 %. Similarly, because required density P(2, 2) is 80 % as shown in Fig. 17A, the dot radius of the standard dot to be formed at location (2, 2) is determined as 60 % as shown in Fig. 17B. Furthermore, the dot radius of the expansion dot to be formed at location (3, 2) is determined as 20 %. Similarly, because required density P(4, 2) is 20 % as shown in Fig. 17A, the dot radius of the standard dot to be formed at location (4, 2) is determined as 60 % as shown in Fig. 17B. Furthermore, the dot radius of the expansion dot to be formed at location (5, 2) is determined as 0 %. On other words, no expansion dot is formed at location (5, 2).

For a line *of y =* 3*,* flag *pos* is updated as *pos* = 1 again. In other words, the position of the standard dot and that of the expansion dot are interchanged. For example, because required density P(0, 3) is 60 % as shown in Fig. 17A, the dot radius of the expansion dot to be formed at location (0, 3) is determined as 20 % as shown in Fig. 17B. Furthermore, the dot radius of the standard dot to be formed at location (1, 3), which is the right neighbor of the standard dot, is determined as 40 %. Similarly, because required density P(2, 3) is 40 % as shown in Fig. 17A, the dot radius of the expansion dot to be formed at location (2, 3) is determined as 20 % as shown in Fig. 17B. Furthermore, the dot radius of the standard dot to be formed at location (3, 3) is determined as 20 %. Similarly, because required density P(4, 3) is 0 % as shown in Fig. 17A, the dot radius of the expansion dot to be formed at location (4, 3) is determined as 0 % as shown in Fig. 17B. Furthermore, the dot radius of the standard dot to be formed at location (5, 3) is determined as 0 %. In other words, no standard dot and no expansion dot are formed at locations (4, 3) and (5, 3).

Fig. 17C shows an example pattern including the standard dots and the expansion dots formed in accordance with the present embodiment. The standard dots and the expansion dots are formed on a lattice corresponding to the maximum print resolution. The resolution of the image formed in accordance with the present embodiment is the maximum print resolution, while the binarization frequency corresponds to a half of the maximum print resolution. Thus, the present embodiment provides an image of the maximum print resolution with three quarters of the binarization frequency. Additionally, the successive dots having the same microscopic density do not appear in the print media feeding direction, in other words, the direction in which the banding appears. Therefore, banding is reduced in an effective manner.

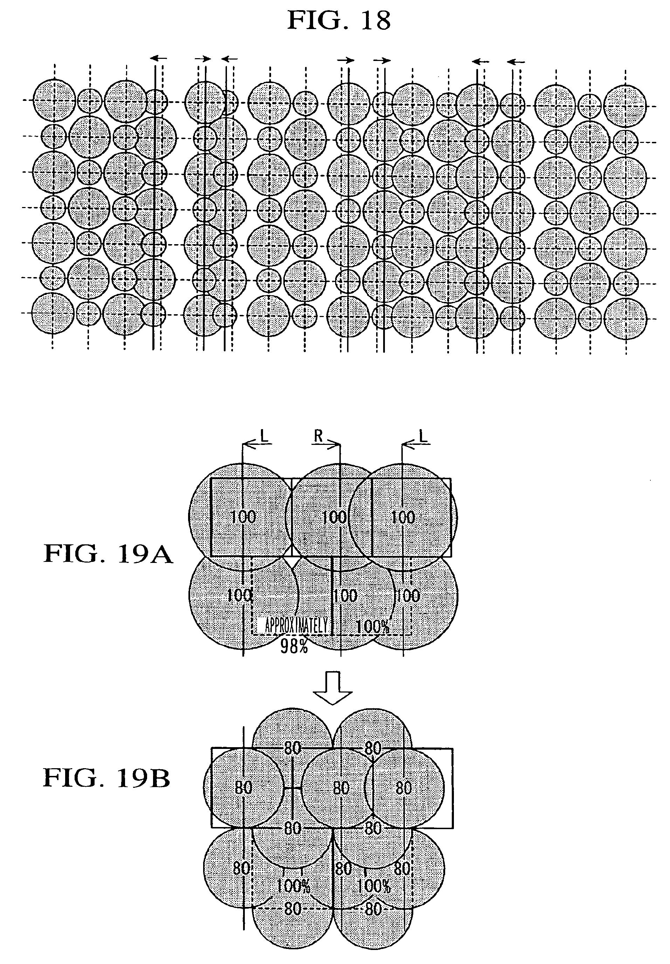

Fig. 18 shows an example pattern including the standard dots and the expansion dots in accordance with the present embodiment. In Fig. 18, the bigger dots are the standard dots and the smaller dots are the expansion dots. Fig. 18 shows an example in which the required densities are constant at 80 % through the whole pattern. As described in Fig. 5, the dot radius of the standard dot is 60 %, and the dot radius of the expansion dot is 20 %. In Fig. 18, dotted lines show ideal positions of dots, and solid lines show actual positions of dots. Arrows show the difference between the ideal position and the actual position. The difference occurs in accordance with, for example, the above described "splash bending" as described in the first embodiment. Fig. 18 shows an example in which the difference is 25 % for dot pitch. As shown in Fig. 18, the image quality is very high because the resolution of the image is 720 dpi, the maximum print resolution. The banding is reduced in an effective manner because the layout of the standard dots and the expansion dots are interchanged every line.

4. Fourth Embodiment

The fourth embodiment of the invention will be described in this section. In the following descriptions, the elements of the present embodiment which are common to the first embodiment are referred to by the same reference numerals. In the present embodiment, printing head A shown in Fig. 12 ejects ink dots, whose density is 80 %, 60 %, 40 %, or 20 %. These densities correspond to the standard dot. Printing head B ejects ink dots, whose density is 80 %, 40 %, or 20 %. These densities correspond to the expansion dot.

The dot radii of standard dots and the expansion dots shown in Fig. 5 and described in the first embodiment are calculated on an assumption that the nozzles of the printing heads are laid out at ideal positions. In other words, the dot radii are calculated on an assumption that the standard dots are formed at the center of the lattice shown in Fig. 5. However, the positions of the actual ink dots are different from the ideal positions because of the "splash bending" or fabrication error of the nozzles.

Figs. 19A and 19B show an example of deviation of ink dots. Fig. 19A shows an example pattern of unit dots with a resolution of 360 dpi (namely, standard dot pitch is 1/360 inch), formed in accordance with the related art. The left column of unit dots deviates to left. The center column of the unit dots deviates to right. The right column of the standard dots deviates to left. The amount of the deviation is 10 % for all columns. The required densities obtained by the binarization are 100 %. Fig. 19B shows an example pattern including the standard dots and the expansion dots, formed in accordance with the present embodiment. According to the expansion dot generation principle shown in Fig. 5, the dot radii of the standard dots and the expansion dots are both 80 %. The dot division shown in Fig. 19B provides the density of unit area (in this case, dot lattice corresponding to 360 dpi) as 100 %.

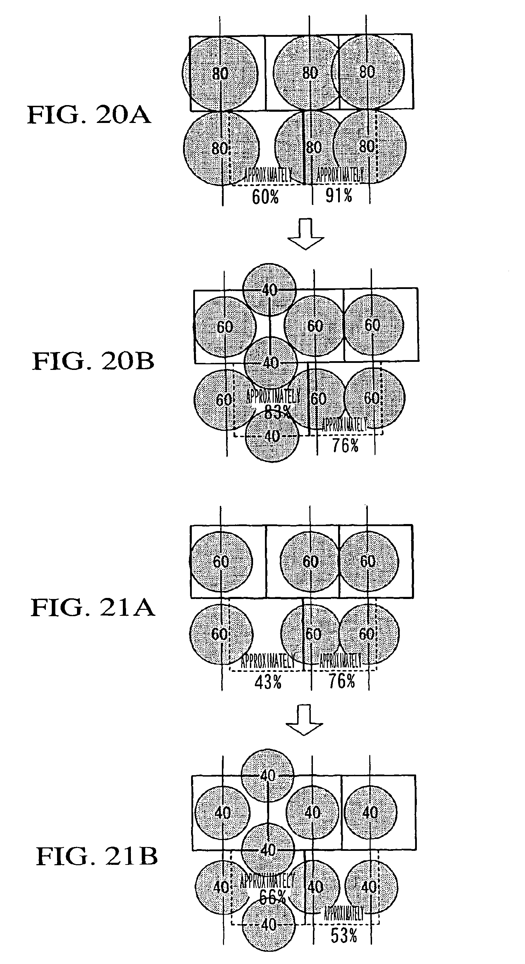

Figs. 20A and 20B show another example of deviation of ink dots. Fig. 20A shows an example pattern of unit dots with a resolution of 360 dpi (namely, standard dot pitch is 1/360 inch), formed in accordance with the related art. The left column of unit dots deviates to left. The center column of the unit dots deviates to right. The right column of the standard dots deviates to left. The amount of the deviation is 10 % for all columns. The required densities obtained by the binarization are 80 %. As described in the first embodiment, according to the expansion dot generation principle shown in Fig. 5, the dot radii of the standard dots and the expansion dots are 60 % and 20 %, respectively. In this case, the density of the image formed by the left dot and the center dot is below 80 %, because distance between these two standard dots is greater than the ideal distance. According to the present embodiment, the dot radius of the expansion dot is determined in response to the deviation of the standard dot. Fig. 20B shows an example pattern including the standard dots and the expansion dots, formed in accordance with the present embodiment. In the example shown in Fig. 20B, the dot radii of the standard dot and the expansion dot are determined as 60 % and 40 %, respectively. In a case that the distance between two standard dots are less than the ideal distance, the dot radii of the standard dot and expansion dot are determined as 60 % and 0 %, respectively. In other words, no expansion dot is formed at the position in which the distance between two standard dots is less than the ideal distance.

Figs. 21 A and 21 B show another example of deviation of ink dots. Fig. 21A shows an example pattern of unit dots with a resolution of 360 dpi (namely, standard dot pitch is 1/360 inch), formed in accordance with the related art. The left column of unit dots deviates to left. The center column of the unit dots deviates to right. The right column of the standard dots deviates to left. The amount of the deviation is 10 % for all columns. The required densities obtained by the binarization are 60 %. As described in the first embodiment, according to the expansion dot generation principle shown in Fig. 5, the dot radii of the standard dots and the expansion dots are 40 % and 20 %, respectively. In this case, the density of the image formed by the left dot and the center dot is below 60 %, because distance between these two standard dots is greater than the ideal distance. According to the present embodiment, the dot radius of the expansion dot is determined in response to the deviation of the standard dot. Fig. 21 B shows an example pattern including the standard dots and the expansion dots, formed in accordance with the present embodiment. In the example shown in Fig. 21B, the dot radii of both, the standard dot and the expansion dot are determined as 40 %. In a case that the distance between two standard dots is less than the ideal distance, the dot radii of the standard dot and the expansion dot are determined as 40 % and 0 %, respectively. In other words, no expansion dot is formed at the position in which the distance between two standard dots is less than the ideal distance.

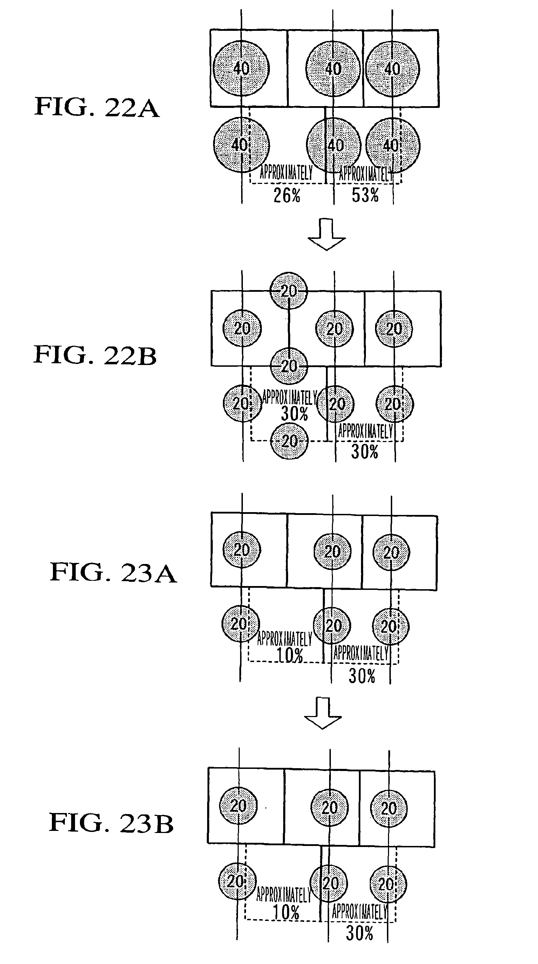

Figs. 22A and 22B show another example of deviation of ink dots. Fig. 22A shows an example pattern of unit dots with a resolution of 360 dpi (namely, standard dot pitch is 1/360 inch), formed in accordance with the related art. The left column of unit dots deviates to left. The center column of the unit dots deviates to right. The right column of the standard dots deviates to left. The amount of the deviation is 10 % for all columns. The required densities obtained by the binarization are 40 %. As described in the first embodiment, according to the expansion dot generation principle shown in Fig. 5, the dot radii of both the standard dots and the expansion dots are 20 %. In this case, the density of the image formed by the left dot and the center dot is below 40 %, because distance between these two standard dots is greater than the ideal distance. According to the present embodiment, the dot radius of the expansion dot is determined in response to the deviation of the standard dot. Fig. 22B shows an example pattern including the standard dots and the expansion dots, formed in accordance with the present embodiment. In the example shown in Fig. 22B, the dot radii of the standard dot and the expansion dot are determined as 20 % and 40 %. In a case that the distance between two standard dots is less than the ideal distance, the dot radii of the standard dot and expansion dot are determined as 20 % and 0 %, respectively. In other words, no expansion dot is formed at the position in which the distance between two standard dots is less than the ideal distance.

Figs. 23A and 23B show another example of deviation of ink dots. Fig. 23A shows an example pattern of unit dots with a resolution of 360 dpi (namely, standard dot pitch is 1/360 inch), formed in accordance with the related art. The left column of unit dots deviates to left. The center column of the unit dots deviates to right. The right column of the standard dots deviates to left. The amount of the deviation is 10 % for all columns. The required densities obtained by the binarization are 20 %. As described in the first embodiment, according to the expansion dot generation principle shown in Fig. 5, the dot radii of the standard dots and the expansion dots are 20 % and 0 %. In the present embodiment, the dot radii of the standard dot and the expansion dot are the same as those of the first embodiment because the minimum density that the nozzles can eject is 20 %. Thus, no expansion dot is formed in this case.

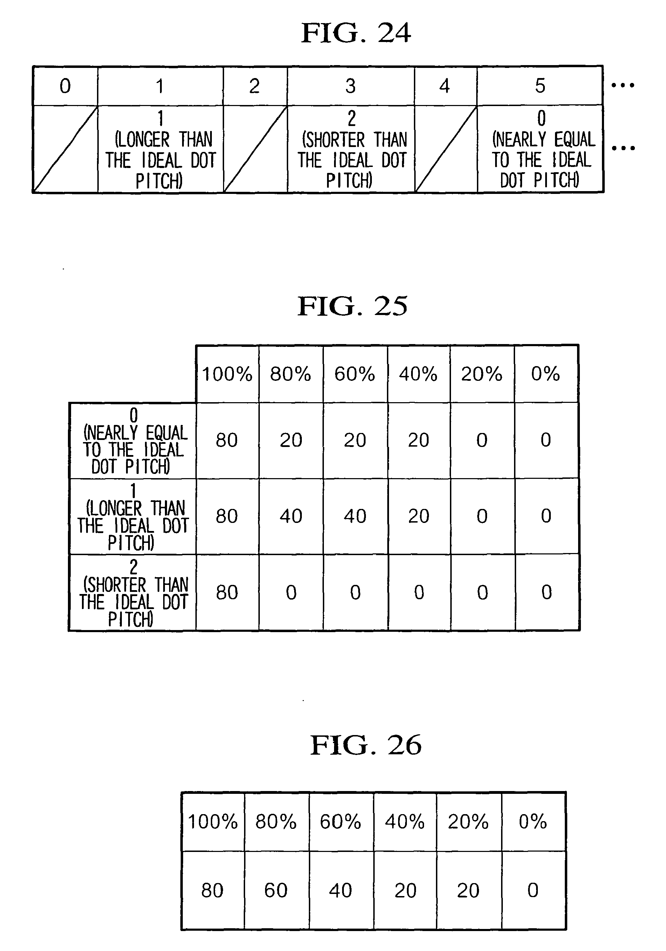

Fig. 24 shows an example of a dot pitch table. The ink eject characteristic of nozzles of an ink jet printer is peculiar to the device. In the present embodiment, ink jet printer 2 stores a dot pitch table including information corresponding to the positions of the ink dots formed on a paper by ink jet printer 2. The dot pitch table includes an identifier of a nozzle and information showing a dot pitch between two dots formed by two nozzles. In the example shown in Fig. 24, x coordinate is an identifier of a nozzle. The x coordinate decreases to the right direction. Furthermore, the information showing a dot pitch is "0", "1", or "2". In a case that the dot pitch is in a range of the ideal dot pitch, the information showing a dot pitch is "0". The range of the ideal dot pitch is defined by the ideal dot pitch with predetermined margin. In a case that the dot pitch is above the range of the ideal dot pitch, the information showing a dot pitch is "1". In a case that the dot pitch is below the range of the ideal dot pitch, the information showing a dot pitch is "2". In Fig. 24, the information showing a dot pitch between two standard dots whose x coordinates are 0 and 2 is "1" because the dot pitch between two standard dots formed by nozzles corresponding to x coordinates of 0 and 2 is above the range of the ideal dot pitch. The information showing a dot pitch between two standard dots whose x coordinates are 0 and 2 is correspondingly stored with x coordinate 1, showing a nozzle located between two nozzles whose x coordinates are 0 and 2. Similarly, the information showing a dot pitch between two standard dots whose x coordinates are 2 and 4 is "2" because the dot pitch between two standard dots formed by nozzles corresponding to x coordinates of 2 and 4 is above the range of the ideal dot pitch. The information showing a dot pitch between two standard dots whose x coordinates are 2 and 4 is correspondingly stored with x coordinate 3. Similarly, the information showing a dot pitch between two standard dots whose x coordinates are 4 and 6 is "0" because the dot pitch between two standard dots formed by nozzles corresponding to x coordinates of 4 and 6 is above the range of the ideal dot pitch. The information showing a dot pitch between two standard dots whose x coordinates are 4 and 6 is correspondingly stored with x coordinate 5.

Fig. 25 shows an example of an expansion dot table. Fig. 26 shows an example of a standard dot table. The expansion dot table includes a required density, information showing a dot pitch, and corresponding dot radius of an expansion dot (in other words, a density). The standard dot table includes a required density and corresponding dot radius of a standard dot. The dot radius of the standard dot is determined on the basis of the principle described in the first embodiment with reference to Fig. 5. Ink jet printer 2 stores the expansion dot table and the standard dot table prior to the printing operation.

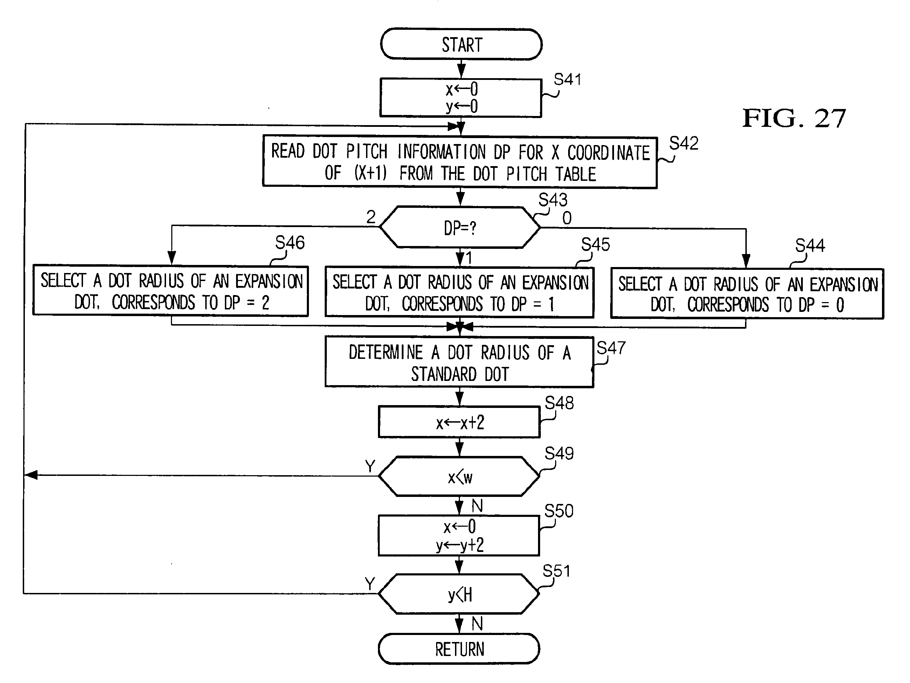

Fig. 27 shows a flow chart illustrating operations for generating an expansion dot in accordance with the present embodiment. In step S41, CPU 60 initializes x and *y* coordinates stored in RAM 62. Next, in step S42, CPU 60 reads dot pitch information DP for x coordinate of (x+1) from the dot pitch table shown in Fig. 24. Next, in step S43, CPU 60 determines an operation to be followed in response to dot pitch information DP. Specifically, when dot pitch information is "0", CPU 60 proceeds to the operations of step S44. When dot pitch information is "1", CPU 60 proceeds to the operation of step S45. When dot pitch information is "2", CPU 60 proceeds to the operation of step S46.

In step S44, CPU 60 selects for required density *P(x, y)* a dot radius of an expansion dot from the expansion dot table shown in Fig. 25. The selected dot radius corresponds to DP = 0, in other words, the dot pitch is in the range of the ideal dot pitch. CPU 60 determines the selected dot radius as a dot radius of an expansion dot *D(*x*+*1*, y+*1)*.* Here, *D(x, y)* denotes a dot located at *(x, y).* After completing the operations in step S44, CPU 60 proceeds to the operations of step S47.

In step S45, CPU 60 selects for required density *P(x, y)* a dot radius of an expansion dot from the expansion dot table shown in Fig. 25. The selected dot radius corresponds to DP = 1, in other words, the dot pitch is above the range of the ideal dot pitch. CPU 60 determines the selected dot radius as a dot radius of an expansion dot *D(x+*1, *y+*1)*.* After completing the operations in step S45, CPU 60 proceeds the operations to step S47.

In step S46, CPU 60 selects for required density *P(x, y)* a dot radius of an expansion dot from the expansion dot table shown in Fig. 25. The selected dot radius corresponds to DP = 2, in other words, the dot pitch is below the range of the ideal dot pitch. CPU 60 determines the selected dot radius as a dot radius of an expansion dot *D(x+*1*, y+*1)*.* After completing the operations in step S46, CPU 60 proceeds to the operations of step S47.

In step S47, CPU 60 determines for required density *P(x, y)* a dot radius of a standard dot from the standard dot table shown in Fig. 26. CPU 60 determines the selected dot radius as a dot radius of a standard dot *D(x, y).* Next, in step S48, CPU 60 updates x coordinates as x = x + 2. In step S49, CPU 60 determines whether the operations are completed for a line, in other words, whether x coordinate is less than print width *W.* When x coordinate is less *than W* (in step S49: YES), CPU 60 repeats the operations of steps S42 - S48. When x coordinate is greater than *W* (in step S49: NO), CPU 60 proceeds to the operations of step S50. In step S50, CPU 60 initializes x coordinate as zero, and updates *y* coordinate *as y = y* + 2. Next, in step S51, CPU 60 determines whether the operations are competed for all lines, in other words, whether *y* coordinate is less than print length *H*. When *y* coordinate is less than H (in step S51: YES), CPU 60 proceeds to the operations of step S42. When *y* coordinate is greater than or equal to H (in step S51: NO), CPU 60 terminates the operations in Fig. 27.

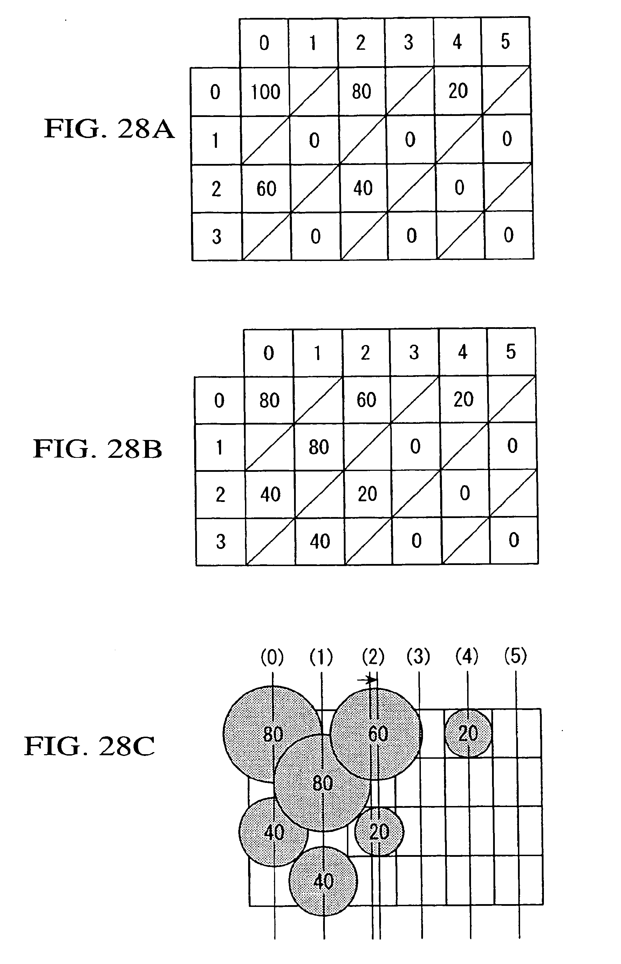

Figs. 28A - 28C show how to calculate the dot radii of the standard dot and the expansion dot. Fig. 28A shows the required densities before the standard dots and the expansion dots are generated. Fig. 28B shows the required densities after the standard dots and the expansion dots have been generated. Fig. 28C shows an example pattern formed based on Fig. 28B. In the example, as shown in Fig. 28C, the standard dot whose x coordinate is "2" deviates to right, compared with the ideal position. In other words, the dot pitch between standard dots whose x coordinate is "0" and "2" is above the range of the ideal dot pitch. In a field corresponding to x coordinate of "1" in the dot pitch table shown in Fig. 24, information "1", showing that the dot pitch is above the range of the ideal dot pitch, is stored. In addition, the dot pitch between two standard dots whose x coordinates are "2" and "4" is below the range of the ideal dot pitch. In a field corresponding to x coordinate of "3" in the dot pitch table shown in Fig. 24, information "2", showing that the dot pitch is below the range of the ideal dot pitch, is stored.

For example, the required density P(0, 0) obtained by the binarization is 100 % as shown in Fig. 28A, the dot radius of a standard dot D(0, 0) is calculated as 80 % on the basis of the dot pitch table shown in Fig. 24, the expansion dot table shown in Fig. 25, and the standard dot table shown in Fig. 26, as shown in Fig. 28B. Here, *D(x, y)* denotes a dot formed at location (x, *y*). Furthermore, the dot radius of an expansion dot *D(*1, 1) is calculated as 80 %. The expansion dot is located to the right in x coordinate and below in *y* coordinate. Similarly, the required density P(2, 0) obtained by the binarization is 80 % as shown in Fig. 28A, the dot radius of a standard dot D(2, 0) is calculated as 60 % as shown in Fig. 28B. Furthermore, the dot radius of an expansion dot D(3, 1) is calculated as 0 %. In other words, no expansion dot is formed at location (3, 1). Similarly, the required density P(4, 0) obtained by the binarization is 20 % as shown in Fig. 28A, the dot radius of a standard dot D(4, 0) is calculated as 20 % as shown in Fig. 28B. Furthermore, the dot radius of an expansion dot D(5, 1) is calculated as 0 %. In other words, no expansion dot is formed at location (5, 1).

The required density P(0, 2) obtained by the binarization is 60 % as shown in Fig. 28A, the dot radius of a standard dot D(0, 2) is calculated as 40 % as show in Fig. 28B. Furthermore, the dot radius of an expansion dot *D*(1, 3) is calculated as 40 %. Similarly, the required density P(2, 2) obtained by the binarization is 40 % as shown in Fig. 28A, the dot radius of a standard dot D(2, 2) is calculated as 20 % as show in Fig. 28B. Furthermore, the dot radius of an expansion dot D(3, 3) is calculated as 0 %. In other words, no expansion dot is formed at location (3, 3). Similarly, the required density P(4, 2) obtained by the binarization is 0 % as shown in Fig. 28A, the dot radius of a standard dot D(4, 2) is calculated as 0 % as show in Fig. 28B. Furthermore, the dot radius of an expansion dot *D(5,* 3) is calculated as 0 %. In other words, no standard dot and no expansion dot are formed at location (4, 2) and (5, 3), respectively.

Fig. 28C shows an example pattern including the standard dots and the expansion dots formed in accordance with the present embodiment. The standard dots and the expansion dots are formed in a staggered arrangement on a lattice corresponding to the maximum print resolution. The effective resolution of the image formed in accordance with the present embodiment is 1/√2 of the maximum print resolution, while the binarization frequency corresponds to a half of the maximum print resolution. The decrease of the binarization frequency is greater than the decrease of the resolution. Additionally, the density per unit area of the formed image is approximately equal to the required density because the dot radii of the standard dot and the expansion dot are determined on the basis of the deviation of the standard dot.

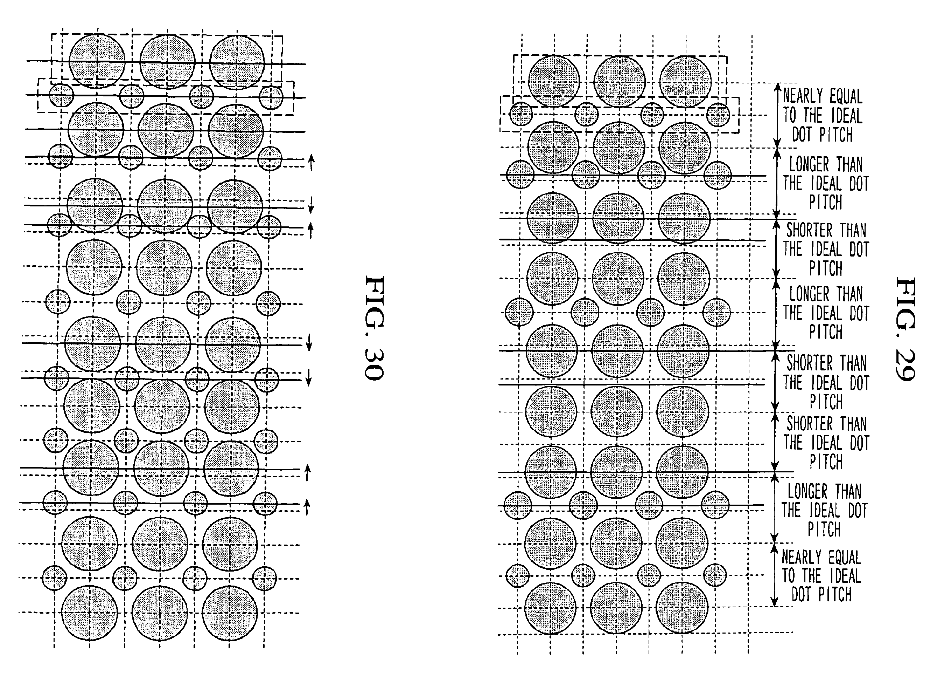

Fig. 29 shows an example pattern including the standard dots and the expansion dots in accordance with the present embodiment. In Fig. 29, the bigger dots are the standard dots and the smaller dots are the expansion dots. Fig. 29 shows an example in which the required densities are constant at 80 % through the whole pattern. As shown in Figs. 25 and 26, (1) in a case that the dot pitch is in the range of the ideal dot pitch, the dot radius of the standard dot and the expansion dot are 60 % and 20 %, respectively. (2) In a case that the dot pitch is above the range of the ideal dot pitch, the dot radius of the standard dot and the expansion dot are 60 % and 40 %, respectively. (3) In a case that the dot pitch is below the range of the ideal dot pitch, the dot radius of the standard dot and the expansion dot are 60 % and 0 %, respectively. In other words, no expansion dot is formed in this case.

In Fig. 29, dotted lines show ideal positions of dots, and solid lines show actual positions of dots. Arrows show the difference between the ideal position and the actual position. The difference occurs in accordance with, for example, the above described "splash bending". In a case that the difference is 25 % for a dot pitch and the dot pitch is 35.3 micrometers (corresponding to 720 dpi), the difference is 9 micrometers. This difference is not small, but no "light band" or no "dark band" appears in the pattern of Fig. 29. In other words, no banding appears in the pattern.

Figs. 8 - 11 shows example patterns formed by the related arts. As already described in the first embodiment, the related arts cannot provide high speed printing (in other words, decreasing the binarization frequency) and a high quality printing (in other words, improving the granularity and decreasing the banding) simultaneously.

Fig. 30 shows an example pattern formed in accordance with the first embodiment. According to the first embodiment, the dot radius of the expansion dot is determined independent on the dot pitch of two standard dots, in other words, the deviation of position of the standard dot. The dot radius of the standard dot is 60 %. The dot radius of the expansion dot is constant at 20 %. Comparing the image formed by the first embodiment and that by the present embodiment, the inconsistencies in density of the first embodiment is slightly greater than that of the present embodiment.

According to the present embodiment, the image processing device has a binarization unit for converting a pixel value of image data into binary data. The pixel value shows a gradation value of a pixel. The image data includes a plurality of pixels. The pixels are laid out as a matrix. The binary data shows a dot radius of a unit dot. The unit dot is laid out with lower resolution than the maximum print resolution at least in a direction of print media feeding direction The image processing device further has an expansion dot generation unit for generating print control data on the basis of the binary data obtained by the binarization unit. The print control data includes data showing dot radii of a standard dot and an expansion dot. The standard dot is formed at a location, which is determined on the basis of the unit dot. The expansion dot is formed at a different location to the standard dot. The image processing device further has an output unit for outputting to an image forming device the print control data generated by the expansion dot generation unit. The image forming device has a plurality of nozzles, each of which ejects an ink dot. The expansion dot generation unit determines the dot radius of the expansion dot on the basis of the deviation of the neighboring standard dot. The image processing device provides decreasing of the binarization frequency. Additionally, the density of the formed image is approximately equal to the required density.

Additionally, according to the image processing device of the present embodiment, the expansion dot generation unit determines the dot radius of the expansion dot so that the density in a unit area of the formed image is approximately equal to the required density. Therefore, the image processing device decreases banding and provides high quality printing.

Additionally, according to the image processing device of the present embodiment, the expansion dot generation unit selects a dot radius from dot radii the nozzles can eject. The expansion dot generation unit selects a dot radius which is the nearest to a dot radius obtained by the binarization unit. Therefore, the image processing device provides high quality printing.

Additionally, according to the image processing device of the present embodiment, printing head A ejects a dot whose dot radius is 80 %, 60 %, 40 %, or 20 %, a dot radius corresponding to the standard dot. In addition, printing head B ejects a dot whose dot radius is 80 %, 40 %, or 20 %, a dot radius corresponding to the expansion dot. In other words, the characteristics of the printing head may be different in printing head A and printing head B. One of the printing heads may be manufactured with low fabrication accuracy. Therefore, the printing heads can be provided at low cost.

5. Fifth Embodiment

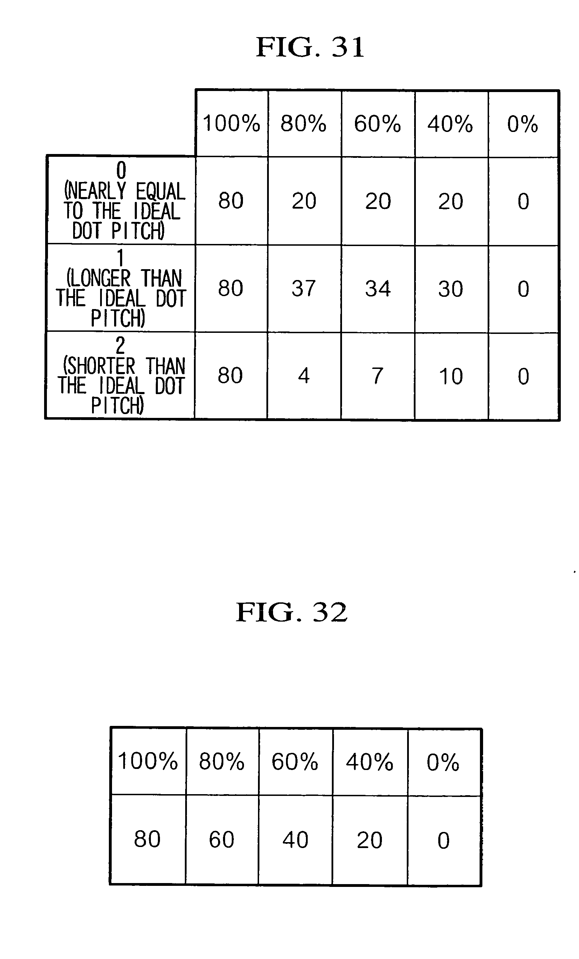

The fifth embodiment of the present embodiment, will be described in this section In the following description, common elements of the first through fourth embodiments will be referred to using the same reference numerals. In the present embodiment, the required density obtained by the binarization in step S3 shown in Fig. 1 is five levels, 100 %, 80 %, 60 %, 40 %, and 0 %. Comparing with the first embodiment, the present embodiment lacks the required density of 20 %. The operation for generating the expansion dot in step S4 of the device driver 3 is almost the same as that of the fourth embodiment shown in Fig. 27. The present embodiment employs the expansion dot table shown in Fig. 31 instead of the expansion dot table shown in Fig. 25 of the fourth embodiment. Furthermore, the present embodiment employs the standard dot table shown in Fig. 32 instead of the standard dot table shown in Fig. 26 of the fourth embodiment. The principle for generating the standard dot and the expansion dot is the same as the first embodiment as shown in Figs. 4 and 5. In the present embodiment, the dot radius capable of being ejected from printing heads A and B are optimized to make the density in a unit area of the formed image equal to the required density.

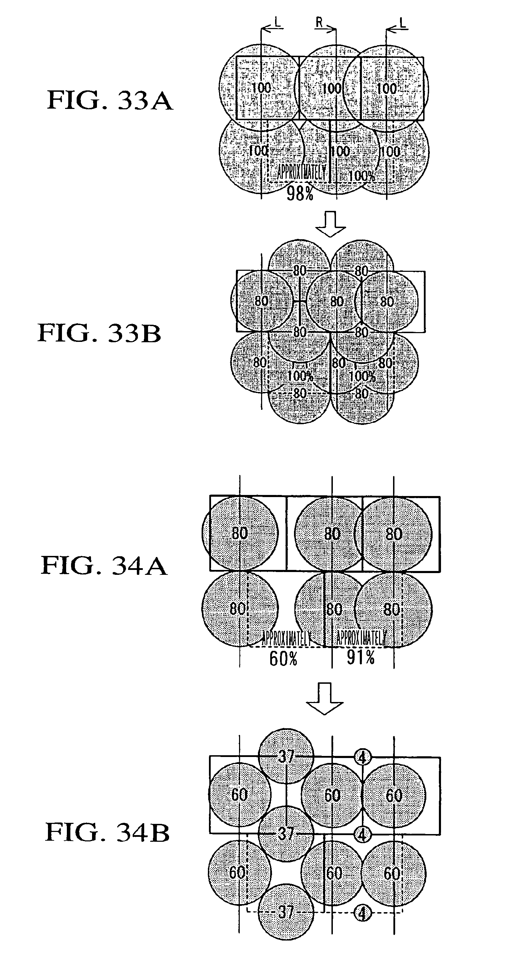

Figs. 33A and 33B show examples of deviation in the position of the ink dots. The resolution is 360 dpi. In other words, the ideal dot pitch is 1/360 inch. In Fig. 33A, the left column of unit dots deviates to left. The center column of the unit dots deviates to right. The right column of the standard dots deviates to left. The amount of the deviation is 10 % for all columns. The required densities obtained by the binarization are 100 %. According to the expansion dot generation principle shown in Fig. 5, the dot radii of the standard dots and the expansion dots are both 80 %. Fig. 33B shows an example pattern including the standard dots and the expansion dots formed by the present embodiment based on the required density shown in Fig. 33A. As shown in Fig. 33B, the density per unit area (a lattice corresponding to the resolution of 360 dpi) of the formed image is approximately 100 %, nearly equal to the required density.

Figs. 34A and 34B show other examples of deviation of ink dots. Fig. 34A shows an example pattern of unit dots with a resolution of 360 dpi (namely, standard dot pitch is 1/360 inch), formed in accordance with the related art. The left column of unit dots deviates to left. The center column of the unit dots deviates to right. The right column of the standard dots deviates to left. The amount of the deviation is 10 % for all columns. The required densities obtained by the binarization are 80 %. As described in the first embodiment, according to the expansion dot generation principle shown in Fig. 5, the dot radii of the standard dots and the expansion dots are 60 % and 20 %, respectively. In this case, the density of the image formed by the left dot and the center dot is below 80 %, because distance between these two standard dots is greater than the ideal distance. According to the present embodiment, the dot radius of the expansion dot is determined in response to the deviation of the standard dot. Fig. 34B shows an example pattern including the standard dots and the expansion dots, formed in accordance with the present embodiment. In the example shown in Fig. 34B, the dot radii of the standard dot and the expansion dot are determined as 60 % and 37 %, respectively. In a case that the distance between two standard dots is less than the ideal distance, the dot radii of the standard dot and the expansion dot are determined as 60 % and 4 %, respectively. Thus, the density per unit are of the formed image is approximately 80 %, nearly equal to the required density.

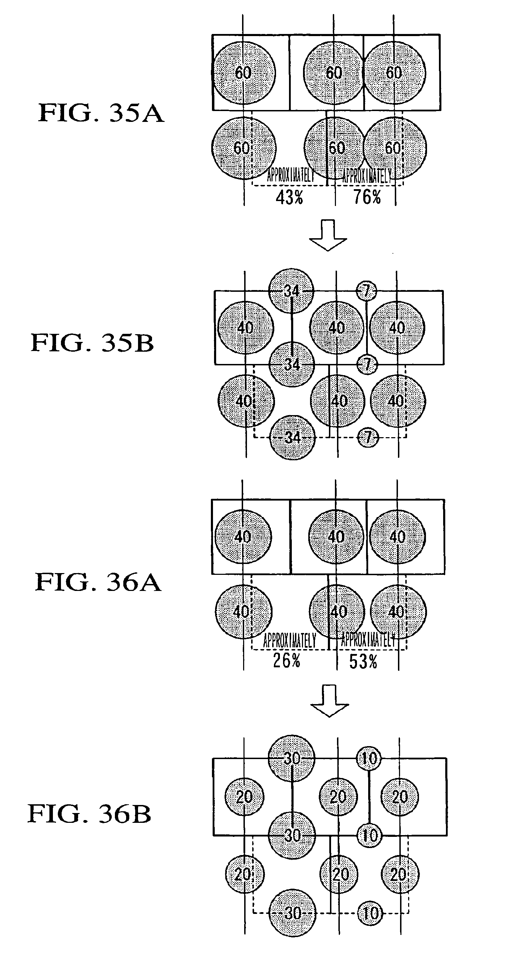

Figs. 35A and 35B show other examples of deviation of ink dots. Fig. 35A shows an example pattern of unit dots with a resolution of 360 dpi (namely, standard dot pitch is 1/360 inch), formed in accordance with the related art. The left column of unit dots deviates to left. The center column of the unit dots deviates to right. The right column of the standard dots deviates to left. The amount of the deviation is 10 % for all columns. The required densities obtained by the binarization are 60 %. As described in the first embodiment, according to the expansion dot generation principle shown in Fig. 5, the dot radii of the standard dots and the expansion dots are 40 % and 20 %, respectively. In this case, the density of the image formed by the left dot and the center dot is below 60 %, because distance between these two standard dots is greater than the ideal distance. According to the present embodiment, the dot radius of the expansion dot is determined in response to the deviation of the standard dot. Fig. 35B shows an example pattern including the standard dots and the expansion dots, formed in accordance with the present embodiment. In the example shown in Fig. 35B, the dot radii of the standard dot and the expansion dot are determined as 40 % and 34 %, respectively. In a case that the distance between two standard dots is less than the ideal distance, the dot radii of the standard dot and the expansion dot are determined as 40 % and 7 %, respectively. Thus, the density per unit area of the formed image is approximately 60 %, nearly equal to the required density.

Figs. 36A and 36B show other examples of deviation of ink dots. Fig. 36A shows an example pattern of unit dots with a resolution of 360 dpi (namely, standard dot pitch is 1/360 inch), formed in accordance with the related art. The left column of unit dots deviates to left. The center column of the unit dots deviates to right. The right column of the standard dots deviates to left. The amount of the deviation is 10 % for all columns. The required densities obtained by the binarization are 40 %. As described in the first embodiment, according to the expansion dot generation principle shown in Fig. 5, the dot radii of the standard dots and the expansion dots are both 20 %. In this case, the density of the image formed by the left dot and the center dot is below 40 %, because distance between these two standard dots is greater than the ideal distance. According to the present embodiment, the dot radius of the expansion dot is determined in response to the deviation of the standard dot. Fig. 36B shows an example pattern including the standard dots and the expansion dots, formed in accordance with the present embodiment. In the example shown in Fig. 36B, the dot radii of the standard dot and the expansion dot are determined as 20 % and 30 %, respectively. In a case that the distance between two standard dots is less than the ideal distance, the dot radii of the standard dot and the expansion dot are determined as 20 % and 10 %, respectively. Thus, the density per unit area of the formed image is approximately 40 %, nearly equal to the required density.

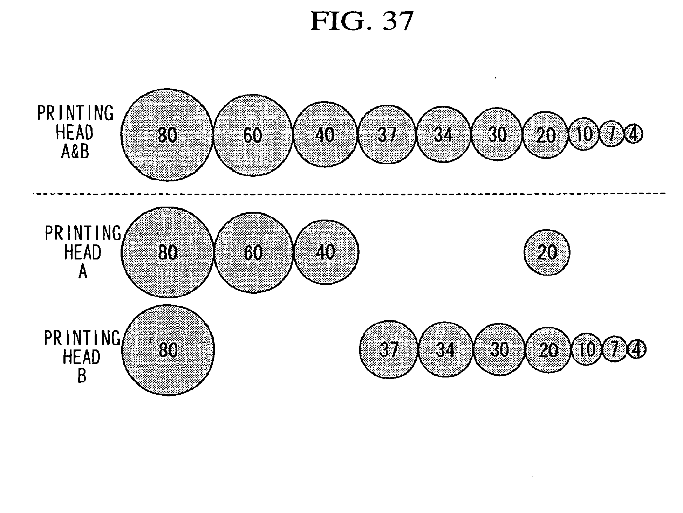

Fig. 37 shows dot radii that printing head A and printing head B can eject. In the present embodiment, printing head A corresponding to the standard dot can eject an ink dot whose dot radius is 80 %, 60 %, 40 %, or 20 %. Printing head B corresponding to the expansion dot can eject an ink dot whose dot radius is 80 %, 37 %, 34 %, 30 %, 20 %, 10 %, 7%, or 4%. The expansion dot table employed by the present embodiment is shown in Fig. 31. The standard dot table employed by the present embodiment is shown in Fig. 32. In a case that the required density is 100 %, the dot radii of the standard dot and the expansion dot are both 80 %. In a case that required density is 80 %, the dot radius of the standard dot is 60 %. The dot radius of the expansion dot depends on the dot pitch between two standard dots. In a case that the dot pitch is in the range of the ideal dot pitch, the dot radius of the expansion dot is 20 %. In a case that the dot pitch is above the range of the ideal dot pitch, the dot radius of the expansion dot is 34 %. In a case that the dot pitch is below the range of the ideal dot pitch, the dot radius of the expansion dot is 7 %. Similarly, in a case that required density is 40 %, the dot radius of the standard dot is 20 %. The dot radius of the expansion dot depends on the dot pitch between two standard dots. In a case that the dot pitch is in the range of the ideal dot pitch, the dot radius of the expansion dot is 20 %. In a case that the dot pitch is above the range of the ideal dot pitch, the dot radius of the expansion dot is 30 %. In a case that the dot pitch is below the range of the ideal dot pitch, the dot radius of the expansion dot is 10 %. It is noted that no standard dot and no expansion dot are formed in a case that the dot radius is 0 %.

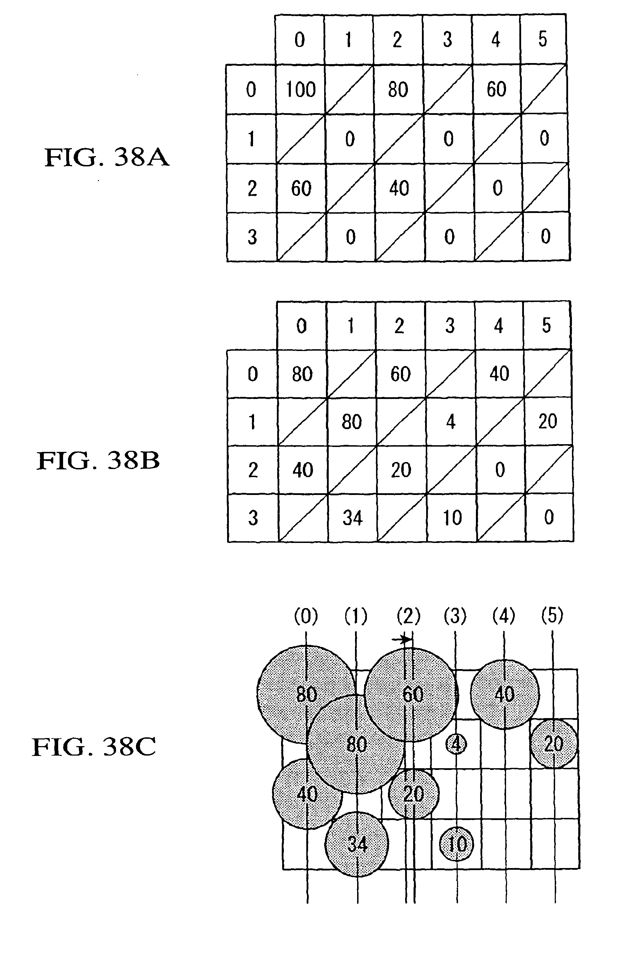

Figs. 38A - 38C show how to calculate the dot radii of the standard dot and the expansion dot. Fig. 38A shows the required density before the standard dot and the expansion dot are generated. Fig. 38B shows the required density after the standard dot and the expansion dot are generated. Fig. 38C shows an example pattern formed based on Fig. 38B. In the example, as shown in Fig. 38C, the standard dot whose x coordinate is "2" deviates to right, compared with the ideal position. In other words, the dot pitch between the standard dots whose x coordinates are "0" and "2" is above the range of the ideal dot pitch In a field corresponding to x coordinate "1" in the dot pitch table shown in Fig. 24, information "1", showing that the dot pitch is above the range of the ideal dot pitch, is stored. In addition, the dot pitch between two standard dots whose x coordinates are "2" and "4" is below the range of the ideal dot pitch In a field corresponding to x coordinate "3" in the dot pitch table shown in Fig. 24, information "2", showing that the dot pitch is below the range of the ideal dot pitch, is stored.

For example, the required density P(0, 0) obtained by the binarization is 100 % as shown in Fig. 38A, the dot radius of a standard dot D(0, 0) is calculated as 80 % on the basis of the dot pitch table shown in Fig. 24, the expansion dot table shown in Fig. 31, and the standard dot table shown in Fig. 32, as shown in Fig. 38B. Here, *D(x, y)* denotes a dot formed at location *(x, y).* Furthermore, the dot radius of an expansion dot D(1, 1) is calculated as 80 %. The expansion dot is located to the right in x coordinate and below in *y* coordinate. Similarly, the required density P(2, 0) obtained by the binarization is 80 % as shown in Fig. 38A, the dot radius of a standard dot D(2, 0) is calculated as 60 % as shown in Fig. 38B. Furthermore, the dot radius of an expansion dot D(3, 1) is calculated as 4 %. Similarly, the required density P(4, 0) obtained by the binarization is 60 % as shown in Fig. 38A, the dot radius of a standard dot D(4, 0) is calculated as 40 % as shown in Fig. 38B. Furthermore, the dot radius of an expansion dot *D(5,* 1) is calculated as 20 %.

The required density P(0, 2) obtained by the binarization is 60 % as shown in Fig. 38A, the dot radius of a standard dot D(0, 2) is calculated as 40 % as shown in Fig. 38B. Furthermore, the dot radius of an expansion dot D(1, 3) is calculated as 34 %. Similarly, the required density P(2, 2) obtained by the binarization is 40 % as shown in Fig. 38A, the dot radius of a standard dot D(2, 2) is calculated as 20 % as shown in Fig. 38B. Furthermore, the dot radius of an expansion dot D(3, 3) is calculated as 10 %. Similarly, the required density P(4, 2) obtained by the binarization is 0 % as shown in Fig. 28A, the dot radius of a standard dot D(4, 2) is calculated as 0 % as shown in Fig. 28B. Furthermore, the dot radius of an expansion dot D(5, 3) is calculated as 0 %. In other words, no standard dot and no expansion dot are formed at location (4, 2) and (5, 3), respectively.

Fig. 38C shows an example pattern including the standard dots and the expansion dots formed in accordance with the present embodiment. The standard dots and the expansion dots are formed in a staggered arrangement on a lattice corresponding to the maximum print resolution. The effective resolution of the image formed in accordance with the present embodiment is 1/√2 of the maximum print resolution, while the binarization frequency corresponds to a half (namely, 1/2) of the maximum print resolution. The decrease of the binarization frequency is greater than the decrease of the resolution. Additionally, the density per unit area of the formed image is approximately equal to the required density because the dot radii of the standard dot and the expansion dot are determined on the basis of the deviation of the standard dot.

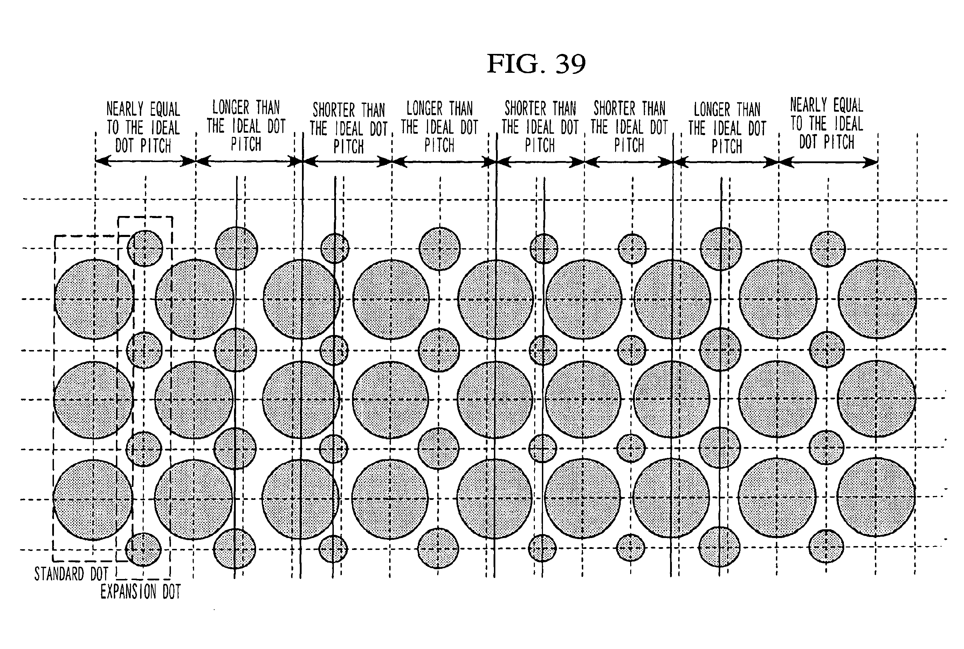

Fig. 39 shows an example pattern including the standard dots and the expansion dots in accordance with the present embodiment. In Fig. 39, the bigger dots are the standard dots and the smaller dots are the expansion dots. Fig. 39 shows an example in which the required densities are constant at 80 % through the whole pattern. As shown in Figs. 31 and 32, (1) in a case that the dot pitch is in the range of the ideal dot pitch, the dot radius of the standard dot and the expansion dot are 60 % and 20 %, respectively. (2) In a case that the dot pitch is above the range of the ideal dot pitch, the dot radius of the standard dot and the expansion dot are 60 % and 37 %, respectively. (3) In a case that the dot pitch is below the range of the ideal dot pitch, the dot radius of the standard dot and the expansion dot are 60 % and 4 %, respectively.

In Fig. 39, dotted lines show ideal positions of dots, and solid lines show actual positions of dots. Arrows show the difference between the ideal position and the actual position. The difference occurs in accordance with, for example, the above described "splash bending". In a case that the difference is 25 % for dot pitch and the dot pitch is 35.3 micrometers (corresponding to 720 dpi), the difference is 9 micrometers. This difference is not small, but no "light band" or no "dark band" appear in the pattern of Fig. 29. In other words, no banding appears in the pattern. Additionally, as a result of optimizing the dot radius of the expansion dot, inconsistencies in density do not appear in the example pattern.

6. Sixth Embodiment

The sixth embodiment of the invention will be described in this section. In the following descriptions, elements common to the first through the fifth embodiments will be referred to with the same reference numerals. Descriptions of the common elements are omitted in this section. In the fourth embodiment, the dot radius of the expansion dot is selected in response to the deviation in density of the ink dot. The deviation in density is caused by the deviation of the position of the ink dot. The deviation in density may be caused not only by the deviation of the position of the ink dot but also by the deviation of the dot radius (the size) of the ink dot. In the present embodiment, the dot radius of the expansion dot is selected in response to the deviation in density of the ink dot, caused by the deviation of the dot size of the ink dot. The present embodiment employs the inter-dot density table described below instead of the dot pitch table shown in Fig. 24.

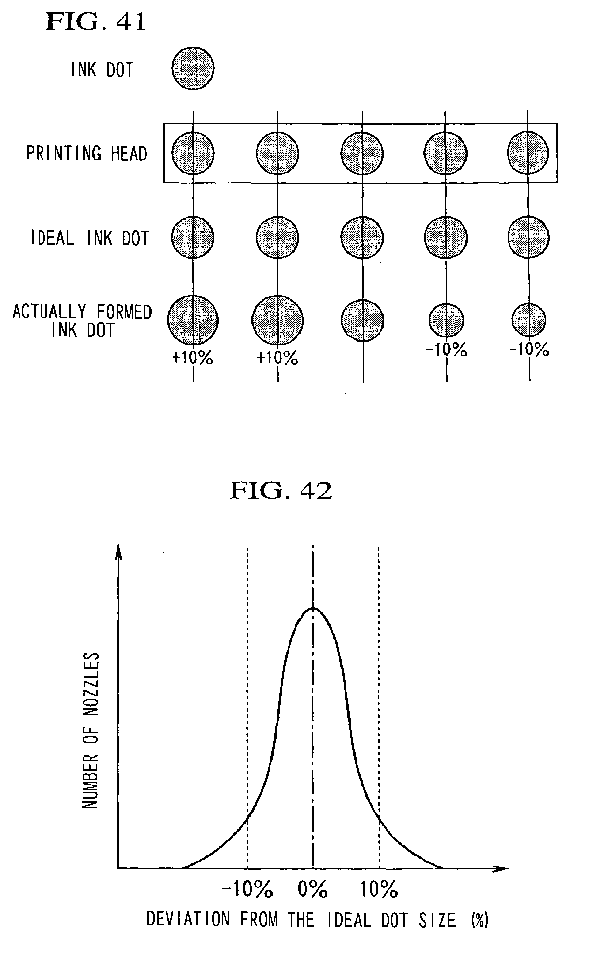

Fig. 41 shows examples of the deviation in the dot size. Fig. 42 shows a histogram of the deviation in dot size. As shown in Fig. 41, even in a case that the nozzle is able to eject only one radius of ink dot, the dot actually formed on a paper has deviation because of, for example, the fabrication error. In the example shown in Fig. 41, the size of the dots formed by the two left nozzles is 10 % bigger than that of the ideal dot size. In addition, the size of the dots formed by the two right nozzles is 10 % smaller than that of the ideal dot size. Fig. 42 is obtained by measuring dot sizes on a printed test pattern. In Fig. 42, ink dots above or below the range of the ideal dot size cause the inconsistencies in density. The range of the ideal dot size is determined by predetermined threshold values, for example, ± 10%.

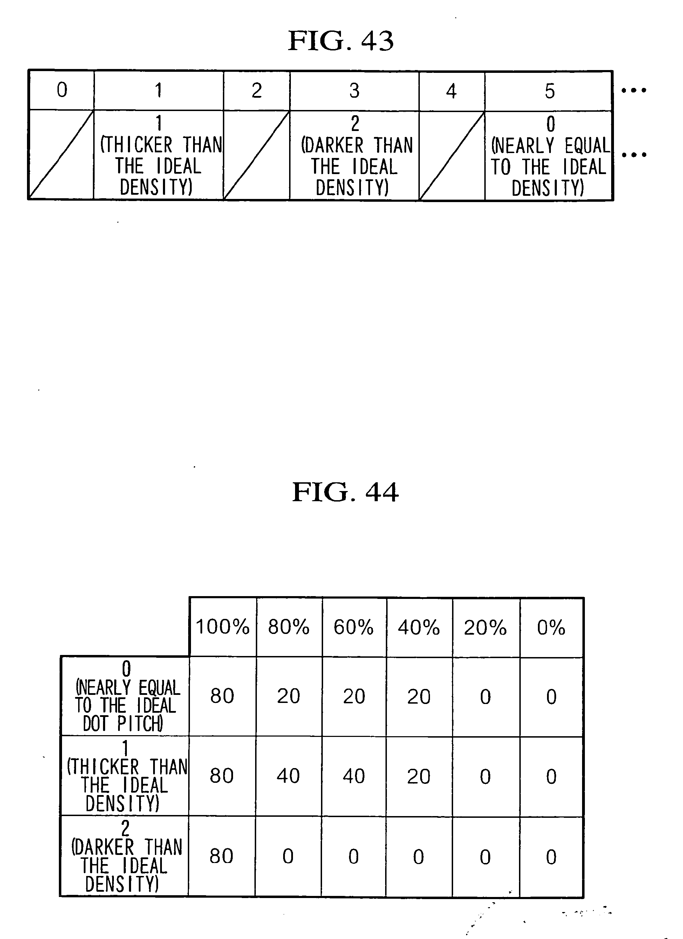

Fig. 43 shows an example of the inter-dot density table in accordance with the present embodiment. The eject characteristics of an ink jet printer is peculiar to the device. In the present embodiment, ink jet printer 2 stores a inter-dot density table including information corresponding to the dot size of the ink dots formed on a paper by ink jet printer 2. The inter-dot density table includes an identifier of a nozzle and information showing a density in a lattice between two dots formed by two nozzles. In the example shown in Fig. 43, x coordinate is an identifier of a nozzle. The x coordinate decreases to the right direction. Furthermore, the information showing an inter-dot density is "0", "1", or "2". In a case that the dot pitch is in a range of the ideal inter-dot density, the information showing an inter-dot density is "0". The range of the ideal inter-dot density is defined by the ideal inter-dot density with predetermined margin. In a case that the inter-dot density is above the range of the ideal inter-dot density, the information showing an inter-dot density is "1". In a case that the inter-dot density is below the range of the ideal inter-dot density, the information showing an inter-dot density is "2". For example, when one of the two neighboring dots is below the range of the ideal inter-dot density and the other is equal to the ideal inter-dot density, the inter-dot density is below the range of the ideal inter-dot density. Alternatively, when both two neighboring dots are below the range of the ideal inter-dot density is a case, the inter-dot density is below the range of the ideal inter-dot density, too.

The inter-dot density table may be generated as follows. Personal computer 1 controls ink jet printer 2 to print a test pattern stored in storage device 70. The test pattern is a pattern to eject a predetermined size of ink dot from each nozzle. The inter-dot density (or dot size) is measured by observation with a microscope or dot analyze tools.

In Fig. 43, the information showing an inter-dot density between two standard dots whose x coordinates are 0 and 2 is "1" because the inter-dot density between two standard dots formed by nozzles corresponding to x coordinates of 0 and 2 is above the range of the ideal inter-dot density. The information showing an inter-dot density between two standard dots whose x coordinates are 0 and 2 is correspondingly stored with x coordinate 1, showing a nozzle located between two nozzles whose x coordinates are 0 and 2. Similarly, the information showing an inter-dot density between two standard dots whose x coordinates are 2 and 4 is "2" because the inter-dot density between two standard dots formed by nozzles corresponding to x coordinates of 2 and 4 is above the range of the ideal inter-dot density. The information showing an inter-dot density between two standard dots whose x coordinates are 2 and 4 is correspondingly stored with x coordinate 3. Similarly, the information showing an inter-dot density between two standard dots whose *x* coordinates are 4 and 6 is "0" because the inter-dot density between two standard dots formed by nozzles corresponding to x coordinates of 4 and 6 is above the range of the ideal inter-dot density. The information showing an inter-dot density between two standard dots whose x coordinates are 4 and 6 is correspondingly stored with x coordinate 5.

Fig. 44 shows an example of the expansion dot table in accordance with the present embodiment. The expansion dot table includes a required density, an inter-dot density between two neighboring standard dots, and corresponding dot radius of an expansion dot. The dot expansion table shown in Fig. 44 is the same as that of the fourth embodiment shown in Fig. 26. Ink jet printer 2 stores the expansion dot table and the standard dot table prior to the printing operation.

The operations for generating the standard dot and the expansion dot is the same as that of the fourth embodiment. The deviation in density is caused by the deviation in position at which the dots are formed in the fourth embodiment. The deviation in density is caused by the deviation in dot size of the dot in the present embodiment. In a case that the deviation in density is caused by both the deviation in position and the deviation in dot size, the operations similar to the present embodiment may be applied. The inter-dot density table of Fig. 43 shows deviation in inter-dot density. There is no limitation for the cause of the deviation in density in the inter-dot density table. Therefore, the present embodiment may be applied to any case independent of the cause of the deviation in density.

7. Further Embodiments

The invention is not limited to the embodiments described above. The dot radius is determined on the basis of the density in accordance with the embodiments described above. The density may be determined on the basis of the dot radius. For example, in a case that the dot diameters are 70 micrometers for L size, 60 micrometers for M size, and 40 micrometers for S size, the density for each dot size are approximately 80 %, 60 %, and 30 %, respectively. A combination of two S-size dots provides a density of 60 %. A combination of S-size dot and M-size dot provides a density of 90 %. Therefore, the required density obtained by the binarization may be four levels, 100 %, 90 %, 60 %, and 0 %.

Additionally, the nozzles corresponding to the expansion dot may use different inks to those corresponding to the standard dot. For example, the nozzles corresponding to the expansion dot may eject paler color ink. According to the embodiment, the dot radius of the expansion dot may be bigger. Therefore, the nozzles for the expansion dot may be manufactured at low accuracy, in other words, at low cost.

In the above described embodiments, an image processing device controls a lone head printer. The image processing device in accordance with the present embodiment may control another printer, for example, a multi-pass printer.

Although the resolution for the binarization is a half of the maximum print resolution in the above described embodiments, the resolution for the binarization is not restricted to a half of the maximum print resolution. The resolution may be another value unless the resolution for the binarization is smaller than the maximum print resolution. For example, the resolution for the binarization may be the quarter of the maximum print resolution. In this case, three expansion dots are generated for one standard dot.

It is noted that another binarization algorithm such as dither matrix method may be employed.

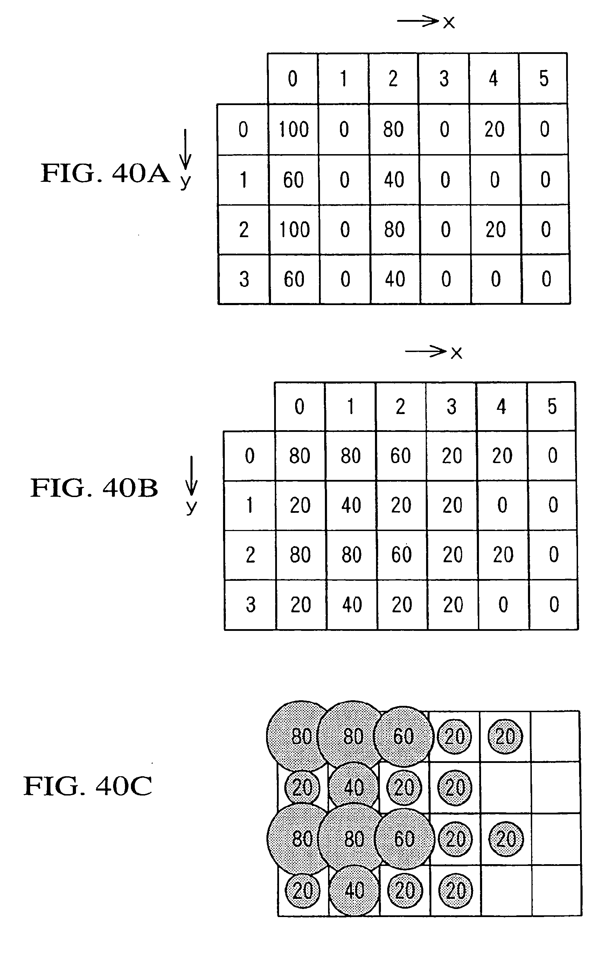

Although the standard dot is formed to the right and below the standard dot, the position of the expansion dot is not restricted to the position. For example, as shown in Figs. 40A - 40C, the standard dot may be formed on every line and the expansion dot may be formed to the right of the corresponding standard dot. According to this embodiment, the binarization frequency corresponds to a half of the maximum print resolution.

In the above described embodiments, the threshold value for the deviation in the density is 10 %. However, the threshold value may be another value. Furthermore, the information showing the dot pitch in the dot pitch table has three levels. The information showing the dot pitch may be more than four levels. For example, the information showing the dot pitch as "very wide" or "very narrow" may be employed.

In the above described embodiments, personal computer 1 executes the operations in steps S1 - S5. However, ink jet printer 2 may execute all or a part of the operations.

## Claims

1. An image processing device, comprising:
a binarization unit for converting a pixel value of image data into binary data, the pixel value showing a gradation value of a pixel, the image data including a plurality of pixels, the pixels being laid out as a matrix, the binary data showing a dot radius of a unit dot, the unit dot being laid out with lower resolution than the maximum print resolution at least in a direction of print media feeding direction;
an expansion dot generation unit for generating print control data on the basis of the binary data obtained by the binarization unit, the print control data including data showing dot radii of a standard dot and an expansion dot, the standard dot being formed at a location, the location being determined on the basis of the unit dot, the expansion dot being formed at a different location to the standard dot; and
an output unit for outputting to a image forming device the print control data generated by the expansion dot generation unit, the image forming device having a plurality of nozzles, the nozzle ejecting an ink dot;
wherein a density of an image including the standard dot and the expansion dot is approximately equal to a density of an image including the unit dot.

2. An image processing device according to Claim 1, wherein the expansion dot is formed at the nearest location to the corresponding standard dot.

3. An image processing device according to Claim 2, wherein:
the expansion dot is formed by one of a plurality of nozzles, the nozzle being located next to a nozzle ejecting the standard dot; and
the expansion dot is formed on a line, the line being next to a line on which the standard dot is formed.

4. An image processing device according to any one of Claims 1 - 3, wherein the dot radius of the standard dot is greater than or equal to that of the corresponding expansion dot.

5. An image processing device according to any one of Claims 1 - 4, wherein each of the dot radius of the standard dot and the expansion dot is an integer multiple of the minimum dot radius.

6. An image processing device according to any one of Claims 1 - 5, wherein the expansion dot generation unit changes the layout of the standard dot and the expansion dot at a predetermined interval, the layout being changed in a direction of print media feeding direction or in a direction orthogonal to the print media feeding direction.

7. An image processing device according to Claim 1, further comprising:
a deviation memory for storing deviations of densities of dots from ideal densities, the dots formed by a plurality of nozzles;
wherein the expansion dot generation unit determines the dot radius of the expansion dot on the basis of the deviation of a nozzle ejecting the standard dot next to the expansion dot.

8. An image processing device according to Claim 7, further comprising:
an expansion dot memory for storing an expansion dot table, the expansion dot table including a deviation of a nozzle, a dot radius of the unit dot, and the dot radius of the corresponding expansion dot;
wherein the expansion dot generation unit determines the dot radius of the expansion dot by referring to the expansion dot table.

9. An image processing device according to Claim 8, wherein the expansion dot generation unit selects a dot radius from dot radii , the selected dot radius is the nearest to a dot radius obtained by the binarization unit.

10. An image processing device according to any one of Claims 7 - 9, wherein the expansion dot generation unit makes the dot radius of the expansion dot bigger in a case that the density of image is less than the ideal density.

11. An image processing device according to any one of Claims 7 - 9, wherein the expansion dot generation unit makes the dot radius of the expansion dot smaller in a case that the density of image is greater than the ideal density.

12. An image processing device according to any one of Claims 7 - 11, wherein the deviation in a density is calculated on the basis of the deviation of a position of a nozzle from the ideal position.

13. An image processing device according to any one of Claims 7-11, wherein the deviation in a density is calculated on the basis of the deviation of a dot radius from the ideal dot radius.

14. An image processing device according to any one of Claims 7 - 11, wherein the deviation in a density is calculated on the basis of both (A) the deviation of a position of a nozzle from the ideal position and (B) the deviation of a dot radius from the ideal dot radius.

15. An image processing method, comprising:
converting a pixel value of image data into binary data, the pixel value showing a gradation value of a pixel, the image data including a plurality of pixels, the pixels being laid out as a matrix, the binary data showing a dot radius of a unit dot, the unit dot being laid out with lower resolution than the maximum print resolution at least in a direction of print media feeding direction;
generating print control data on the basis of the binary data, the print control data including data showing dot radii of a standard dot and an expansion dot, the standard dot being formed at a location, the location being determined on the basis of the unit dot, the expansion dot being formed at a different location to the standard dot; and
outputting to an image forming device the print control data, the image forming device having a plurality of nozzles, the nozzle ejecting an ink dot;
wherein a density of an image including the standard dot and the expansion dot is approximately equal to a density of an image including the unit dot.
